# EUROPÄISCHE PATENTSCHRIFT

(11) **EP 0 792 309 B1**
(45) Veröffentlichungstag und Bekanntmachung des Hinweises auf die Patenterteilung: **18.09.2002**
(21) Anmeldenummer: 95924943.4
(22) Anmeldetag: 27.06.1995
(51) Int. Cl.: C08G 63/20, C08G 63/60, C08G 18/42

(54) **BIOLOGISCH ABBAUBARE POLYMERE, VERFAHREN ZU DEREN HERSTELLUNG SOWIE DEREN VERWENDUNG ZUR HERSTELLUNG BIOABBAUBARER FORMKÖRPER**
BIODEGRADABLE POLYMERS, PROCESS FOR THEIR PRODUCTION AND THEIR USE IN PRODUCING BIODEGRADABLE MOULDINGS
POLYMERES BIODEGRADABLES, LEUR PROCEDE DE PRODUCTION ET LEUR UTILISATION POUR LA FABRICATION DE CORPS MOULES BIODEGRADABLES

(30) Priorität: 15.11.1994 DE 4440858
(43) Veröffentlichungstag der Anmeldung: 03.09.1997
(60) Teilanmeldung: 00122950.9
(73) Patentinhaber: BASF AKTIENGESELLSCHAFT, 67056 Ludwigshafen (DE)
(72) Erfinder: WARZELHAN, Volker, D-67273 Weisenheim (DE); SCHORNICK, Gunnar, D-67271 Neuleiningen (DE); BRUCHMANN, Bernd, D-67069 Ludwigshafen (DE); SEELIGER, Ursula, D-67059 Ludwigshafen (DE); YAMAMOTO, Motonori, D-68199 Mannheim (DE); BAUER, Peter, D-67071 Ludwigshafen (DE)
(86) Internationale Anmeldenummer: EP9502491
(87) Internationale Veröffentlichungsnummer: WO96015173

(56) Entgegenhaltungen:
- EP-A- 0 028 687
- EP-A- 0 569 143
- WO-A-91/02015
- US-A- 3 763 079
- CHEMICAL ABSTRACTS, vol. 105, no. 20, 17.November 1986 Columbus, Ohio, US; abstract no. 173699z, ISHIGURO, MICHIHIRO ET AL. 'Polyurethanes' Seite 46; & JP,A,61 081 419 (KURARAY CO., LTD.)
- DATABASE WPI Week 9410 Derwent Publications Ltd., London, GB; AN 94-079832 & JP,A,06 032 357 (SHOWA HIGH POLYMER CO., LTD) , 8.Februar 1994

## Beschreibung

Die vorliegende Erfindung betrifft biologisch abbaubare Polyester P1, erhältlich durch Reaktion einer Mischung, bestehend im wesentlichen aus
(a1) einer Mischung, bestehend im wesentlichen aus
   45 bis 80 mol-% Adipinsäure oder esterbildende Derivate davon oder Mischungen davon,
   20 bis 55 mol-% Terephthalsäure oder esterbildende Derivate davon oder Mischungen davon, und
   0 bis 5 mol-% einer sulfonatgruppenhaltigen Verbindung,
   wobei die Summe der einzelnen Molprozentangaben 100 mol-% beträgt, und
(a2) einer Dihydroxyverbindung, ausgewählt aus der Gruppe bestehend aus C₂-C₆-Alkandiolen und C₅-C₁₀-Cycloalkandiolen,
wobei man das Molverhältnis von (a1) zu (a2) im Bereich von 0,4:1 bis 1,5:1 wählt, mit der Maßgabe, daß die Polyester P1 ein Molekulargewicht (Mₙ) im Bereich von 5000 bis 50000 g/mol, eine Viskositätszahl im Bereich von 30 bis 350 g/ml (gemessen in o-Dichlorbenzol/Phenol (Gew.-Verhältnis 50/50) bei einer Konzentration von 0,5 Gew.-% Polyester P1 bei einer Temperatur von 25°C) und einen Schmelzpunkt im Bereich von 50 bis 170°C aufweisen, und mit der weiteren Maßgabe, daß man von 0,01 bis 5 mol-%, bezogen auf die Molmenge der eingesetzten Komponente (a1), eine Verbindung D mit mindestens drei zur Esterbildung befähigten Gruppen zur Herstellung der Polyester P1 einsetzt.

Des weiteren betrifft die Erfindung Polymere und biologisch abbaubare thermoplastische Formmassen gemäß Unteransprüche, Verfahren zu deren Herstellung, deren Verwendung zur Herstellung biologisch abbaubarer Formkörper sowie Klebstoffe, biologisch abbaubare Formkörper, Schäume und Blends mit Stärke, erhältlich aus den erfindungsgemäßen Polymeren bzw. Formmassen.

Polymere, die biologisch abbaubar sind, d.h. die unter Umwelteinflüssen in einer angemessenen und nachweisbaren Zeitspanne zerfallen, sind seit einiger Zeit bekannt. Der Abbau erfolgt dabei in der Regel hydrolytisch und/oder oxidativ, zum überwiegenden Teil jedoch durch die Einwirkung von Mikroorganisman wie Bakterien, Hefen, Pilzen und Algen. Y.Tokiwa und T. Suzuki (Nature, Bd. 270, S. 76-78, 1977) beschreiben den enzymatischen Abbau von aliphatischen Polyestern, beispielsweise auch Polyester auf der Basis von Bernsteinsäure und aliphatischer Diole.

In der EP-A 565,235 werden aliphatische Copolyester, enthaltend [-NH-C(O)O-]-Gruppen ("Urethan-Einheiten"), beschrieben. Die Copolyester der EP-A 565,235 werden durch Umsetzung eines Präpolyesters - erhalten durch Umsetzung von im wesentlichen Bernsteinsäure und eines aliphatischen Diols - mit einem Diisocyanat, bevorzugt Hexamethylendiisocyanat, erhalten. Die Umsetzung mit dem Diisocyanat ist gemäß der EP-A 565,235 erforderlich, da durch die Polykondensation alleine nur Polymere mit solchen Molekulargewichten erhalten werden, die keine befriedigenden mechanischen Eigenschaften aufweisen. Von entscheidendem Nachteil ist die Verwendung von Bernsteinsäure oder deren Esterderivate zur Herstellung der Copolyester, weil Bernsteinsäure bzw. deren Derivate teuer und in nicht genügender Menge auf dem Markt verfügbar sind. Außerdem werden bei Verwendung von Bernsteinsäure als einziger Säurekomponente die daraus hergestellten Polyester nur extrem langsam abgebaut.

Aus der WO 92/13019 sind Copolyester auf Basis überwiegend aromatischer Dicarbonsäuren und aliphatischer Diole bekannt, wobei mindestens 85 mol-% des Polyesterdiolrestes aus einem Terephthalsäurerest bestehen. Durch Modifikationen wie den Einbau von bis zu 2,5 Mol-% Metallsalze der 5-Sulfoisophthalsäure oder kurzkettigen Etherdiol-Segmenten wie Diethylenglycol wird die Hydrophilie des Copolyesters gesteigert und die Kristallinität vermindert. Hierdurch soll gemäß der WO 92/13019 ein biologischer Abbau der Copolyester ermöglicht werden. Nachteilig an diesen Copolyestern ist jedoch, daß ein biologischer Abbau durch Mikroorganismen nicht nachgewiesen wurde, sondern lediglich das Verhalten gegenüber Hydrolyse in kochendem Wasser oder in manchen Fällen auch mit Wasser von 60°C durchgeführt wurde.

Nach Angaben von Y.Tokiwa und T.Suzuki (Nature, Bd. 270, 1977, S. 76-78 oder J. of Appl. Polymer Science, Bd. 26, S. 441-448, 1981) ist davon auszugehen, daß Polyester, die weitgehend aus aromatischen Dicarbonsäure-Einheiten und aliphatischen Diolen aufgebaut sind, wie PET (Polyethylenterephthalat) und PBT (Polybutylenterephthalat), enzymatisch nicht abbaubar sind. Dies gilt auch für Copolyester, die Blöcke, aufgebaut aus aromatischen Dicarbonsäureeinheiten und aliphatischen Diolen, enthalten.

Witt et al. (Handout zu einem Poster auf dem International Workshop des Royal Institute of Technology, Stockholm, Schweden, vom 21.bis 23.04.94) beschreiben biologisch abbaubare Copolyester auf der Basis von 1,3-Propandiol, Terephthalsäureester und Adipinoder Sebazinsäure. Nachteilig an diesen Copolyestern ist, daß daraus hergestellte Formkörper, insbesondere Folien, unzureichende mechanische Eigenschaften aufweisen.

Aufgabe der vorliegenden Erfindung war es daher, biologisch, d.h. durch Mikroorganismen, abbaubare Polymere bereitzustellen, die diese Nachteile nicht aufweisen. Insbesondere sollten die erfindungsgemäßen Polymere aus bekannten und preiswerten Monomerbausteinen herstellbar und wasserunlöslich sein. Des weiteren sollte es möglich sein, durch spezifische Modifikationen wie Kettenverlängerung, Einbau von hydrophilen Gruppen und verzweigend wirkenden Gruppen, maßgeschneiderte Produkte für die gewünschten erfindungsgemäßen Anwendungen zu erhalten. Dabei sollte der biologische Abbau durch Mikroorganismen nicht auf Kosten der mechanischen Eigenschaften erreicht werden, um die Zahl der Anwendungsgebiete nicht einzuschränken.

Demgemäß wurden die eingangs definierten Polymere und thermoplastischen Formmassen gefunden.

Des weiteren wurden Verfahren zu deren Herstellung, deren Verwendung zur Herstellung biologisch abbaubarer Formkörper und Klebstoffe sowie biologisch abbaubare Formkörper, Schäume, Blends mit Stärke und Klebstoffe, erhältlich aus den erfindungsgemäßen Polymeren und Formmassen, gefunden.

Die erfindungsgemäßen Polyester P1 sind charakterisiert durch ein Molekulargewicht (Mₙ) im Bereich von 5000 bis 50000, vorzugsweise von 6000 bis 45000, besonders bevorzugt von 8000 bis 35000 g/mol, eine Viskositätszahl im Bereich von 30 bis 350, vorzugsweise von 50 bis 300 g/ml (gemessen in o-Dichlorbenzol/Phenol (Gew.-Verhältnis 50/50) bei einer Konzentration von 0,5 Gew.-% Polyester P1 bei einer Temperatur von 25°C) und einen Schmelzpunkt im Bereich von 50 bis 170, vorzugsweise von 60 bis 160°C. Die Polyester P1 erhält man erfindungsgemäß, indem man eine Mischung, bestehend im wesentlichen aus
(a1) einer Mischung, bestehend im wesentlichen aus
   35 bis 95, vorzugsweise von 45 bis 80 mol-% Adipinsäure oder esterbildende Derivate davon, insbesondere die Di-C₁-C₆-alkylester wie Dimethyl-, Diethyl-, Dipropyl-, Dibutyl-, Dipentyl- und Dihexyladipat, oder deren Mischungen, bevorzugt Adipinsäure und Dimethyladipat, oder Mischungen davon,
   5 bis 65, vorzugsweise 20 bis 55 mol-%, Terephthalsäure oder esterbildende Derivate davon, insbesondere die Di-C₁-C₆-alkylester wie Dimethyl-, Diethyl-, Dipropyl-, Dibutyl-, Dipentyl- oder Dihexylterephthalat, oder deren Mischungen, bevorzugt Terephthalsäure und Dimethylterephthalat, oder Mischungen davon, und
   0 bis 5, vorzugsweise von 0 bis 3, besonders bevorzugt von 0,1 bis 2 mol-% einer sulfonatgruppenhaltigen Verbindung,
   wobei die Summe der einzelnen Molprozentangaben 100 mol-% beträgt, und
(a2) einer Dihydroxyverbindung, ausgewählt aus der Gruppe bestehend aus C₂-C₆-Alkandiolen und C₅-C₁₀-Cycloalkandiolen,
wobei man das Molverhältnis von (a1) zu (a2) im Bereich von 0,4:1 bis 1,5:1, vorzugsweise von 0,6:1 bis 1,1:1 wählt, zur Reaktion bringt.

Als sulfonatgruppenhaltige Verbindung setzt man üblicherweise ein Alkali- oder Erdalkalimetallsalz einer sulfonatgruppenhaltigen Dicarbonsäure oder deren esterbildende Derivate ein, bevorzugt Alkalimetallsalze der 5-Sulphoisophthalsäure oder deren Mischungen, besonders bevorzugt das Natriumsalz.

Als Dihydroxyverbindungen (a2) setzt man erfindungsgemäß eine Verbindung, ausgewählt aus der Gruppe bestehend aus C₂-C₆-Alkandiolen und C₅-C₁₀-Cycloalkandiolen, wie Ethylenglykol, 1,2-, 1,3-Propandiol, 1,2-, 1,4-Butandiol, 1,5-Pentandiol oder 1,6-Hexandiol, insbesondere Ethylenglykol, 1,3-Propandiol und 1,4-Butandiol, Cyclopentandiol, 1,4-Cyclohexandiol, 1,2-Cyclohexandimethanol, 1,4-Cyclohexandimethanol, sowie Mischungen daraus, ein.

Des weiteren verwendet erfindungsgemäß man von 0,01 bis 5, vorzugsweise von 0,05 bis 4 mol-%, bezogen auf die Komponente (a1), mindestens eine Verbindung D mit mindestens drei zur Esterbildung befähigten Gruppen.

Die Verbindungen D enthalten bevorzugt drei bis zehn funktionelle Gruppen, welche zur Ausbildung von Esterbindungen fähig sind. Besonders bevorzugte Verbindungen D haben drei bis sechs funktionelle Gruppen dieser Art im Molekül, insbesondere drei bis sechs Hydroxylgruppen und/oder Carboxylgruppen. Beispielhaft seien genannt:
Weinsäure, Citronensäure, Äpfelsäure;
Trimethylolpropan, Trimethylolethan;
Pentaerythrit;
Polyethertriole;
Glycerin;
Trimesinsäure;
Trimellitsäure, -anhydrid;
Pyromellitsäure, -dianhydrid und
Hydroxyisophthalsäure.

Beim Einsatz von Verbindungen D, die einen Siedepunkt unterhalb von 200°C aufweisen, kann bei der Herstellung der Polyester P1 ein Anteil vor der Reaktion aus dem Polykondensationsgemisch abdestillieren. Es ist daher bevorzugt, diese Verbindungen in einer frühen Verfahrensstufe wie der Umesterungs- bzw. Veresterungsstufe zuzusetzen, um diese Komplikation zu vermeiden und um die größtmögliche Regelmäßigkeit ihrer Verteilung innerhalb des Polykondensats zu erzielen.

Im Falle höher als 200°C siedender Verbindungen D können diese auch in einer späteren Verfahrensstufe eingesetzt werden.

Durch Zusatz der Verbindung D kann beispielsweise die Schmelzviskosität in gewünschter Weise verändert, die Schlagzähigkeit erhöht und die Kristallinität der erfindungsgemäßen Polymere bzw. Formmassen herabgesetzt werden.

Die Herstellung der biologisch abbaubaren Polyester P1 ist grundsätzlich bekannt (Sorensen und Campbell, "Preparative Methods of Polymer Chemistry", Interscience Publishers, Inc., New York, 1961, Seiten 111 bis 127; Encyl. of Polym. Science and Eng.,
Bd. 12, 2. Ed., John Wiley & Sons, 1988, S. 1 bis 75; Kunststoff-Handbuch, Band 3/1, Carl Hanser Verlag, München, 1992, S. 15 bis 23 (Herstellung von Polyestern); WO 92/13019; EP-A 568,593;
EP-A 565,235; EP-A 28,687), so daß sich nähere Angaben hierüber erübrigen.

So kann man beispielsweise die Umsetzung von Dimethylestern der Komponente a1 mit der Komponente a2 ("Umesterung") bei Temperaturen im Bereich von 160 bis 230°C in der Schmelze bei Atmosphärendruck vorteilhaft unter Inertgasatmosphäre durchführen.

Vorteilhaft wird bei der Herstellung des biologisch abbaubaren Polyesters P1 ein molarer Überschuß der Komponente a2, bezogen auf die Komponente a1, verwendet, beispielsweise bis zum 2 1/2fachen, bevorzugt bis zum 1,67fachen.

Üblicherweise erfolgt die Herstellung des biologisch abbaubaren Polyesters P1 unter Zugabe von geeigneten, an sich bekannten Katalysatoren wie Metallverbindungen auf der Basis folgender Elemente wie Ti, Ge, Zn, Fe, Mn, Co, Zr, V, Ir, La, Ce, Li, und Ca, bevorzugt metallorganische Verbindungen auf der Basis dieser Metalle wie Salze organischer Säuren, Alkoxide, Acetylacetonate und ähnliches, insbesondere bevorzugt auf Basis von Zink, Zinn und Titan.

Bei Verwendung von Dicarbonsäuren oder deren Anhydride als Komponente (a1) kann deren Veresterung mit Komponente (a2) vor, gleichzeitig oder nach der Umesterung stattfinden. In einer bevorzugten Ausführungsform verwendet man das in der DE-A 23 26 026 beschriebene Verfahren zur Herstellung modifizierter Polyalkylenterephthalate.

Nach der Umsetzung der Komponenten (a1) und (a2) wird in der Regel unter vermindertem Druck oder in einem Inertgasstrom, beispielsweise aus Stickstoff, bei weiterem Erhitzen auf eine Temperatur im Bereich von 180 bis 260°C die Polykondensation bis zum gewünschten Molekulargewicht durchgeführt. Um unerwünschte Abbau- und/oder Nebenreaktionen zu vermeiden, kann man in dieser Verfahrensstufe gewünschtenfalls auch Stabilisatoren zusetzen. Solche Stabilisatoren sind beispielsweise die in der EP-A 13 461, US 4,328,049 oder in B. Fortunato et al., Polymer Vol. 35, Nr. 18, S. 4006 bis 4010, 1994, Butterworth-Heinemann Ltd., beschriebenen Phosphor-Verbindungen. Diese können zum Teil auch als Deaktivatoren der oben beschriebenen Katalysatoren wirken. Beispielhaft seien genannt: Organophosphite, phosphonige Säure und phosphorige Säure. Als Verbindungen, die nur als Stabilisatoren wirken seien beispielhaft genannt: Trialkylphosphite, Triphenylphosphit, Trialkylphosphate, Triphenylphosphat und Tocopherol (Vitamin E; beispielsweise als Uvinul®2003AO (BASF) erhältlich).

Bei der Verwendung der erfindungsgemäßen biologisch abbaubaren Copolymere, beispielsweise im Verpackungsbereich z.B. für Nahrungsmittel, ist es in der Regel wünschenswert, den Gehalt an eingesetztem Katalysator so gering als möglich zu wählen sowie keine toxischen Verbindungen einzusetzen. Im Gegensatz zu anderen Schwermetallen wie Blei, Zinn, Antimon, Cadmium, Chrom etc. sind Titan- und Zinkverbindungen in der Regel nicht toxisch ("Sax Toxic Substance Data Book", Shizuo Fujiyama, Maruzen, K.K., 360 S. (zitiert in EP-A 565,235), siehe auch Römpp Chemie Lexikon Bd. 6, Thieme Verlag, Stuttgart, New York, 9. Auflage, 1992, S. 4626 bis 4633 und 5136 bis 5143). Beispielhaft seien genannt: Dibutoxydiacetoacetoxytitan, Tetrabutylorthotitanat und Zink(II)-acetat.

Das Gewichtsverhältnis von Katalysator zu biologisch abbaubaren Polyester P1 liegt üblicherweise im Bereich von 0,01:100 bis 3:100, vorzugsweise von 0,05:100 bis 2:100, wobei bei hochaktiven ) Titanverbindungen auch kleinere Mengen eingesetzt werden können wie 0,0001:100.

Der Katalysator kann gleich zu Beginn der Reaktion, unmittelbar kurz vor der Abtrennung des überschüssigen Diols oder gewünschtenfalls auch in mehreren Portionen verteilt während der Herstellung der biologisch abbaubaren Polyester P1 eingesetzt werden. Gewünschtenfalls können auch verschiedene Katalysatoren oder auch Gemische davon eingesetzt werden.

Die erfindungsgemäßen biologisch abbaubaren Polyester Q1 sind charakterisiert durch ein Molekulargewicht (Mₙ) im Bereich von 5000 bis 100000, vorzugsweise von 8000 bis 80000, durch eine Viskositätszahl im Bereich von 30 bis 450, vorzugsweise von 50 bis 400 g/ml (gemessen in o-Dichlorbenzol/Phenol (50/50 Gew.%) bei einer Konzentration von 0,5 Gew.% Polyester Q1 bei einer Temperatur von 25°C), und einen Schmelzpunkt im Bereich von 50 bis 235, vorzugsweise von 60 bis 235°C.

Die Polyester Q1 erhält man erfindungsgemäß, indem man eine Mischung zur Reaktion bringt, bestehend im wesentlichen aus
(c1) Polyester P1,
   oder Polyester P1 und einem Polyester PWD,
(c2) 0,01 bis 50, vorzugsweise von 0,1 bis 40 Gew.-%, bezogen auf (c1), Hydroxycarbonsäure B1,
   wobei die Hydroxycarbonsäure B1 definiert ist durch die Formeln Ia oder Ib 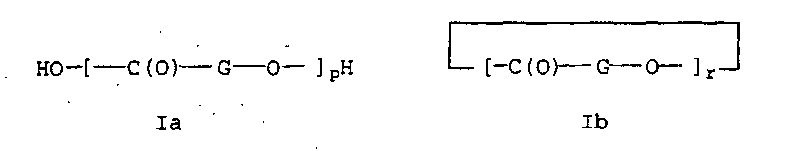 in der p eine ganze Zahl von 1 bis 1500, vorzugsweise von 1 bis 1000 und r 1, 2, 3 oder 4, vorzugsweise 1 und 2, bedeuten, und G für einen Rest steht, der ausgewählt ist aus der Gruppe bestehend aus Phenylen, -(CH₂)ₙ-, wobei n eine ganze Zahl von 1, 2, 3, 4 oder 5, vorzugsweise 1 und 5, bedeutet, -C(R)H- und -C(R)HCH₂, wobei R für Methyl oder Ethyl steht.
   und
(c3) 0 bis 5, vorzugsweise von 0 bis 4 mol-%, bezogen auf Komponente (a1) aus der Herstellung von P1 und/oder PWD, Verbindung D.

Der biologisch abbaubare Polyester PWD ist im allgemeinen erhältlich durch Reaktion von im wesentlichen den Komponenten (a1) und (a2), wobei man das Molverhältnis von (a1) zu (a2) im Bereich von 0,4:1 bis 1,5:1, vorzugsweise von 0,6:1 bis 1,25:1 wählt, mit der Maßgabe, daß die Polyester PWD ein Molekulargewicht (Mₙ) im Bereich von 5000 bis 50000, vorzugsweise von 6000 bis 35000 g/mol, eine Viskositätszahl im Bereich von 30 bis 350, vorzugsweise von 50 bis 300 g/ml (gemessen in o-Dichlorbenzol/Phenol (Gew.-Verhältnis 50/50) bei einer Konzentration von 0,5 Gew.-% Polyester PWD bei einer Temperatur von 25°C) und einen Schmelzpunkt im Bereich von 50 bis 170, vorzugsweise von 60 bis 160°C aufweisen.

Die Umsetzung der Polyester P1, oder der Polyester P1 und PWD, mit der Hydroxycarbonsäure B1 gewünschtenfalls in Gegenwart der Verbindung D erfolgt vorzugsweise in der Schmelze bei Temperaturen im Bereich von 120 bis 260°C unter Inertgasatmosphäre, gewünschtenfalls auch unter vermindertem Druck. Man kann sowohl diskontinuierlich als auch kontinuierlich, beispielsweise in Rührkesseln oder (Reaktions-)Extrudern, arbeiten.

Die Umsetzung kann gewünschtenfalls durch Zugabe an sich bekannter Umesterungskatalysatoren (siehe die weiter oben bei der Herstellung der Polyester P1 beschriebenen) beschleunigt werden.

In einer bevorzugten Ausführungsform setzt man als Hydroxycarbonsäure B1 ein: Glycolsäure, D-, L-, D,L-Milchsäure, 6-Hydroxyhexansäure, deren cyclische Derivate wie Glycolid (1,4-Dioxan-2,5-dion), D-, L-Dilactid (3,6-dimethyl-1,4-5 dioxan-2,5-dion), p-Hydroxybenzoesäure sowie deren Oligomere und Polymere wie 3-Polyhydroxybuttersäure, Polyhydroxyvaleriansäure, Polylactid (beispielsweise als EcoPLA® (Fa. Cargill) erhältlich) sowie eine Mischung aus 3-Polyhydroxybuttersäure und Polyhydroxyvaleriansäure (letzteres ist unter dem Namen Biopol® von Zeneca erhältlich).

Eine bevorzugte Ausführungsform betrifft Polyester Q1 mit Blockstrukturen gebildet aus den Komponenten P1 und B1: bei Verwendung cyclischer Derivate von B1 (Verbindungen Ib) können bei der Umsetzung mit dem biologisch abbaubaren Polyester P1 durch eine sogenannte "ringöffnende Polymerisation", ausgelöst durch die Endgruppen von P1, in an sich bekannter Weise Polyester Q1 mit Blockstrukuren erhalten werden (zur "ringöffnenden Polymerisation" siehe Encycl. of Polym. Science and Eng. Bd. 12, 2.Ed., John Wiley & Sons, 1988, S. 36 bis 41). Die Reaktion kann man gewünschtenfalls unter Zusatz üblicher Katalysatoren wie den bereits weiter oben beschriebenen Umesterungskatalysatoren durchführen, insbesondere bevorzugt ist Zinn-octanoat (siehe auch Encycl. of Polym. Science and Eng. Bd. 12, 2.Ed., John Wiley & Sons, 1988, S. 36 bis 41).

Bei Verwendung von Komponenten B1 mit höheren Molekulargewichten, beispielsweise mit einem p von größer als 10 (zehn), können durch Umsetzung mit den Polyestern P1 in Rührkesseln oder Extrudern, die gewünschten Blockstrukturen durch die Wahl der Reaktionsbedingungen wie Temperatur, Verweilzeit, Zusatz von Umesterungskatalysatoren wie den oben genannten erhalten werden. So ist aus J. of Appl. Polym. Sci., Vol. 32, S. 6191 bis 6207, John Wiley & Sons, 1986 sowie aus Makromol. Chemie, Vol. 136, S. 311 bis 313, 1970 bekannt, daß bei der Umsetzung von Polyestern in der Schmelze aus einem Blend durch Umesterungsreaktionen zunächst Blockcopolymere und dann statistische Copolymere erhalten werden können.

Die erfindungsgemäßen biologisch abbaubaren Polyester Q2 sind charakterisiert durch ein Molekulargewicht (Mₙ) im Bereich von 6000 bis 60000, vorzugsweise von 8000 bis 50000, besonders bevorzugt von 10000 bis 40000 g/mol, durch eine Viskositätszahl im Bereich von 30 bis 350, vorzugsweise von 50 bis 300 g/ml (gemessen in o-Dichlorbenzol/Phenol (50/50 Gew.%) bei einer Konzentration von 0,5 Gew.% Polyester Q2 bei einer Temperatur von 25°C), und einen Schmelzpunkt im Bereich von 50 bis 170 °C, vorzugsweise von 60 bis 160 °C.

Die Polyester Q2 erhält man erfindungsgemäß, indem man eine Mischung zur Reaktion bringt, bestehend im wesentlichen aus
(d1) von 95 bis 99,9, vorzugsweise von 96 bis 99,8, besonders bevorzugt von 97 bis 99,65 Gew.-% Polyester P1, oder Polyester P1 und Polyester PWD, gemäß Anspruch 2,
(d2) von 0,1 bis 5, vorzugsweise 0,2 bis 4, besonders bevorzugt von 0,35 bis 3 Gew.-% eines Diisocyanats C1 und
(d3) von 0 bis 5, vorzugsweise von 0 bis 4 mol-%, bezogen auf Komponente (a1) aus der Herstellung von P1 und/oder PWD, Verbindung D.

Als Diisocyanat C1 kann man nach bisherigen Beobachtungen alle üblichen und kommerziell erhältlichen Diisocyanate einsetzen. Bevorzugt setzt man ein Diisocyanat ein, das ausgewählt ist aus der Gruppe, bestehend aus Toluylen-2,4-diisocyänat,
Toluylen-2,6-diisocyanat, 4,4'- und 2,4'-Diphenylmethandiisocyanat, Naphthylen-1,5-diisocyanat, Xylylen-diisocyanat, Hexamethylendiisocyanat, Isophorondiisocyanat und Methylen-bis(4-isocyanatocyclohexan), besonders bevorzugt Hexamethylendiisocyanat.

Prinzipiell kann man auch trifunktionelle Isocyanat-Verbindungen, die Isocyanurat- und/oder Biuretgruppen mit einer Funktionalität nicht kleiner als drei enthalten können; einsetzen oder die Diisocyanat-Verbindungen C1 partiell durch Tri- oder Polyisocyanate ersetzen.

Die Umsetzung der Polyester P1, oder der Polyester P1 und PWD, mit dem Diisocyanat C1 erfolgt vorzugsweise in der Schmelze, wobei darauf zu achten ist, daß möglichst keine Nebenreaktionen auftreten, die zu einer Vernetzung oder Gelbildung führen können. In einer besonderen Ausführungsform führt man die Reaktion üblicherweise bei Temperaturen im Bereich von 130 bis 240, vorzugsweise von 140 bis 220°C durch, wobei die Zugabe des Diisocyanats vorteilhaft in mehreren Portionen oder kontinuierlich erfolgt.

Gewünschtenfalls kann man die Umsetzung der Polyesters P1, oder der Polyester P1 und PWD, mit dem Diisocyanat C1 auch in Gegenwart von gängigen inerten Lösemitteln wie Toluol, Methylethylketon oder Dimethylformamid ("DMF") oder deren Mischungen durchführen, wobei man die Reaktionstemperatur in der Regel im Bereich von 80 bis 200, vorzugsweise von 90 bis 150°C wählt.

Die Umsetzung mit dem Diisocyanat C1 kann diskontinuierlich oder kontinuierlich beispielsweise in Rührkesseln, Reaktionsextrudern oder über Mischköpfe durchgeführt werden.

Man kann bei der Umsetzung der Polyester P1, oder der Polyester P1 und PWD, mit den Diisocyanaten C1 auch gängige Katalysatoren einsetzen, die aus dem Stand der Technik bekannt sind (beispielsweise die in der EP-A 534,295 beschriebenen) oder die bei der Herstellung von den Polyestern P1 und Q1 einsetzbar sind bzw. eingesetzt wurden und, falls man bei der Herstellung von Polyester Q2 so verfährt, daß man die Polyester P1, oder die Polyester P1 und PWD, nicht isoliert, nun weiterbenutzt werden können.

Beispielhaft seien genannt: tert. Amine wie Triethylamin, Dimethylcyclohexylamin, N-Methylmorpholin, N,N'-Dimethylpiperazin, Diazabicyclo-[2.2.2-]octan und ähnliche sowie insbesondere organische Metallverbindungen wie Titanverbindungen, Eisenverbindungen, Zinnverbindungen, z.B. Dibutoxydiacetoacetoxytitan, Tetrabutylorthotitanat, Zinndiacetat, -dioctoat, -dilaurat oder die Zinndialkylsalze aliphatischer Carbonsäuren wie Dibutylzinndiacetat, Dibutylzinndilaurat oder ähnliche, wobei wiederum darauf zu achten ist, daß möglichst keine toxischen Verbindungen eingesetzt werden sollten.

Obwohl das theoretische Optimum für die Reaktion von P1, oder P1 und PWD, mit Diisocyanaten C1 bei einem Molverhältnis der,Isocyanat-Funktion zu P1-(bzw. PWD-)Endgruppe (bevorzugt sind Polyester P1 und/oder PWD mit überwiegend Hydroxy-Endgruppen) von 1:1 liegt, kann die Umsetzung ohne technische Probleme auch bei Molverhältnissen von 1:3 bis 1,5:1 durchgeführt werden. Bei Molverhältnissen von >1:1 kann gewünschtenfalls während der Umsetzung oder auch nach der Umsetzung die Zugabe eines Kettenverlängerungsmittels, ausgewählt aus den Komponenten (a2), bevorzugt ein C₂-C₆-Diol, erfolgen.

Die erfindungsgemäßen biologisch abbaubaren Polymere T1 sind charakterisiert durch ein Molekulargewicht (Mₙ) im Bereich von 10000 bis 100000, vorzugsweise von 11000 bis 80000, vorzugsweise von 11000 bis 50000 g/mol, eine Viskositätszahl im Bereich von 30 bis 450, vorzugsweise von 50 bis 400 g/ml (gemessen in o-Dichlorbenzol/Phenol (Gew.-Verhältnis 50/50) bei einer Konzentration von 0,5 Gew.-% Polymer T1 bei einer Temperatur von 25°C) und einen Schmelzpunkt im Bereich von 50 bis 235, vorzugsweise von 60 bis 235°C.

Die biologisch abbaubaren Polymere T1 erhält man erfindungsgemäß, indem man einen Polyester Q1 gemäß Anspruch 2 mit
(e1) 0,1 bis 5, vorzugsweise von 0,2 bis 4, besonders bevorzugt von 0,3 bis 2,5 Gew.-%, bezogen auf den Polyester Q1, Diisocyanat C1 sowie mit
(e2) 0 bis 5, vorzugsweise von 0 bis 4 mol-%, bezogen auf Komponente (a1) aus der Herstellung von P1 und/oder PWD sowie Polyester Q1, Verbindung D zur Reaktion bringt.

Auf diese Weise wird üblicherweise eine Kettenverlängerung erreicht, wobei die erhaltenen Polymerketten vorzugsweise eine Blockstruktur aufweisen.

Die Umsetzung erfolgt in der Regel analog zur Herstellung der Polyester Q2.

Die erfindungsgemäßen biologisch abbaubaren Polymere T2 sind charakterisiert durch ein Molekulargewicht (Mₙ) im Bereich von 10000 bis 100000, vorzugsweise von 11000 bis 80000, besonders bevorzugt von 11000 bis 50000 g/mol, mit einer Viskositätszahl im Bereich von 30 bis 450, vorzugsweise von 50 bis 400 g/ml (gemessen in o-Dichlorbenzol/Phenol (Gew.-Verhältnis 50/50) bei einer Konzentration von 0,5 Gew.-% Polymer T2 bei einer Temperatur von 25 °C) und einem Schmelzpunkt im Bereich von 50 bis 235, vorzugsweise von 60 bis 235°C.

Die biologisch abbaubaren Polymere T2 erhält man erfindungsgemäß durch Umsetzung des Polyesters Q2 mit
(f1) 0,01 bis 50, vorzugsweise von 0,1 bis 40 Gew.-%, bezogen auf den Polyester Q2, der Hydroxycarbonsäure B1 sowie mit
(f2) 0 bis 5, vorzugsweise von 0 bis 4 mol-%, bezogen auf Komponente (a1) aus der Herstellung von P1 und/oder PWD sowie des Polyesters Q2, Verbindung D,
wobei man zweckmäßig analog zur Umsetzung von Polyester P1 mit Hydroxycarbonsäure B1 zu Polyester Q1 verfährt.

Die erfindungsgemäßen biologisch abbaubaren Polymere T3 sind charakterisiert durch ein Molekulargewicht (Mₙ) im Bereich von 10000 bis 100000, vorzugsweise von 11000 bis 80000 g/mol, eine Viskositätszahl im Bereich von 30 bis 450, vorzugsweise von 50 bis 400 g/ml (gemessen in o-Dichlorbenzol/Phenol (Gew.-Verhältnis 50/50) bei einer Konzentration von 0,5 Gew.-% Polymer T3 bei einer Temperatur von 25°C) und einem Schmelzpunkt im Bereich von 50 bis 235, vorzugsweise von 60 bis 235°C.

Die biologisch abbaubaren Polymere T3 erhält man erfindungsgemäß, indem man (g1) eine Mischung bestehend im wesentlichen aus Polyester P1 und 0,01 bis 50, vorzugsweise von 0,1 bis 40 Gew.-%, bezogen auf den Polyester P1, Hydroxycarbonsäure B1, oder (g2) eine Mischung, bestehend im wesentlichen aus Polyestern P1, die eine unterschiedliche Zusammensetzung voneinander aufweisen, mit

0,1 bis 5, vorzugsweise von 0,2 bis 4, besonders bevorzugt von 0,3 bis 2,5 Gew.-%, bezogen auf die Menge der eingesetzten Polyester, Diisocyanat C1 sowie

mit 0 bis 5, vorzugsweise von 0 bis 4 mol-%, bezogen auf die jeweiligen Molmengen an Komponente (a1), die zur Herstellung der eingesetzten Polyester (g1) bis (g3) eingesetzt wurden, Verbindung D, zur Reaktion bringt, wobei man die Umsetzungen zweckmäßig analog zur Herstellung der Polyester Q2 aus den Polyestern P1 und/oder PWD und den Diisocyanaten C1 vornimmt.

Die biologisch abbaubaren thermoplastischen Formmassen T4 erhält man erfindungsgemäß, indem man in an sich bekannter Weise, bevorzugt unter Zusatz üblicher Additive wie Stabilisatoren, Verarbeitungshilfsmitteln, Füllstoffen etc. (siehe J. of Appl. Polym. Sc., Vol. 32, S. 6191 bis 6207, John Wiley & Sons, 1986; WO 92/0441; EP 515,203; Kunststoff-Handbuch, Bd. 3/1, Carl Hanser Verlag München, 1992, S. 24 bis 28)
(h1) 99,5 bis 0,5 Gew.-% Polyester P1 gemäß Anspruch 1 oder Polyester Q2 gemäß Anspruch 3 mit
(h2) 0,5 bis 99,5 Gew.-% Hydroxycarbonsäure B1 mischt.

In einer bevorzugten Ausführungsform setzt man hochmolekulare Hydroxycarbonsäuren B1 wie Polycaprolacton oder Polylactid oder Polyglykolid oder Polyhydroxyalkanoate wie 3-Polyhydroxybuttersäure mit einem Molekulargewicht (Mₙ) im Bereich von 10000 bis 150000, vorzugsweise von 10000 bis 100000 g/mol, oder eine Mischung aus 3-Polyhydroxybuttersäure und Polyhydroxyvaleriansäure ein.

Aus WO 92/0441 und EP-A 515,203 ist es bekannt, daß hochmolekulares Polylactid ohne Zusätze von Weichmachern für die meisten Anwendungen zu spröde ist. In einer bevorzugten Ausführungsform kann man ein Blend ausgehend von 0,5 bis 20, vorzugsweise von 0,5 bis 10 Gew.-% Polyester P1 gemäß Anspruch 1 oder Polyester Q2 gemäß Anspruch 3 und 99,5 bis 80, vorzugsweise von 99,5 bis 90 Gew.-% Polylactid herstellen, das eine deutliche Verbesserung der mechanischen Eigenschaften, beispielsweise eine Erhöhung der Schlagzähigkeit, gegenüber reinem Polylactid aufweist.

Eine weitere bevorzugte Ausführungsform betrifft ein Blend, erhältlich durch Mischen von 99,5 bis 40, vorzugsweise von 99,5 bis 60 Gew.-% Polyester P1 gemäß Anspruch 1 oder Polyester Q2 gemäß Anspruch 3 und von 0,5 bis 60, vorzugsweise von 0,5 bis 40 Gew.-% einer hochmolekularen Hydroxycarbonsäure B1, besonders bevorzugt Polylactid, Polyglycolid, 3-Polyhydroxybuttersäure und Polycaprolacton. Solche Blends können vollständig biologisch abgebaut werden und weisen nach den bisherigen Beobachtungen sehr gute mechanische Eigenschaften auf.

Nach bisherigen Beobachtungen erhält man die erfindungsgemäßen thermoplastischen Formmassen T4 bevorzugt dadurch, daß man kurze Mischzeiten einhält, beispielsweise bei einer Durchführung des Mischens in einem Extruder. Durch Wahl der Mischparameter, insbesondere der Mischzeit und gewünschtenfalls der Verwendung von Deaktivatoren, sind auch Formmassen zugänglich, die überwiegend Blendstrukturen aufweisen, d.h., daß der Mischvorgang so gesteuert werden kann, daß zumindest teilweise auch Umesterungsreaktionen stattfinden können.

In einer weiteren bevorzugten Ausführungsform kann man O bis 50, vorzugsweise O bis 30 Mol-% der Adipinsäure, oder ihrer esterbildende Derivate oder deren Mischungen, durch mindestens eine andere aliphatische C₄-C₁₀- oder cycloaliphatische C₅-C₁₀-Dicarbonsäure oder Dimerfettsäure wie Bernsteinsäure, Glutarsäure, Pimelinsäure, Korksäure, Azelainsäure oder Sebazinsäure oder ein Esterderivat wie deren Di-C₁-C₆-alkylester oder deren Anhydride wie Bernsteinsäureanhydrid, oder deren Mischungen, ersetzen, bevorzugt Bernsteinsäure, Bernsteinsäureanhydrid, Sebacinsäure, Dimerfettsäure und Di-C₁-C₆-alkylester wie Dimethyl-, Diethlyl-, Din-propyl-, Diisobutyl-, Di-n-pentyl-, Dineopentyl-, Di-n-hexylester davon, insbesondere Dimethylbernsteinsäureester.

Eine besonders bevorzugte Ausführungsform betrifft den Einsatz als Komponente (a1) die in der EP-A 7445 beschriebene Mischung aus Bernsteinsäure, Adipinsäure und Glutarsäure sowie deren C₁-C₆-Alkylester, insbesondere der Dimethylester und Diisobutylester.

In einer weiteren bevorzugten Ausführungsform kann man O bis 50, vorzugsweise O bis 40 Mol-% der Terephthalsäure oder ihrer esterbildende Derivate, oder deren Mischungen durch mindestens eine andere aromatische Dicarbonsäure wie Isophthalsäure, Phthalsäure oder 2,6-Naphthalindicarbonsäure, bevorzugt Isophthalsäure, oder ein Esterderivat wie einen Di-C₁-C₆-alkylester, insbesondere den Dimethylester, oder deren Mischungen, ersetzen.

Allgemein sei angemerkt, daß man die unterschiedlichen erfindungsgemäßen Polymere wie üblich aufarbeiten kann, indem man die Polymere isoliert, oder, insbesondere, wenn man die Polyester P1, Q1 und Q2 weiter umsetzen möchte, indem man die Polymere nicht isoliert, sondern gleich weiterverarbeitet.

Die erfindungsgemäßen Polymere kann man durch Walzen, Streichen, Spritzen oder Gießen auf Beschichtungsunterlagen aufbringen. Bevorzugte Beschichtungsunterlagen sind solche, die kompostierbar sind oder verrotten wie Formkörper aus Papier, Cellulose oder Stärke.

Die erfindungsgemäßen Polymere können außerdem zur Herstellung von Formkörpern verwendet werden, die kompostierbar sind. Als Formkörper seien beispielhaft genannt: Wegwerfgegenstände wie Geschirr, Besteck, Müllsäcke, Folien für die Landwirtschaft zur Ernteverfrühung, Verpackungsfolien und Gefäße für die Anzucht von Pflanzen.

Des weiteren kann man die erfindungsgemäßen Polymere in an sich bekannter Weise zu Fäden verspinnen. Die Fäden kann man gewünschtenfalls nach üblichen Methoden verstrecken, streckzwirnen, streckspulen, streckschären, streckschlichten und strecktexturieren. Die Verstreckung zu sogenanntem Glattgarn kann dabei in ein und demselben Arbeitsgang (fully drawn yarn oder fully oriented yarn), oder in einem getrennten Arbeitsgang erfolgen. Das Streckschären, Streckschlichten und die Strecktexturierung führt man im allgemeinen in einem vom Spinnen getrennten Arbeitsgang durch. Die Fäden kann man in an sich bekannter Weise zu Fasern weiterverarbeiten. Aus den Fasern sind dann Flächengebilde durch Weben, Wirken oder Stricken zugänglich.

Die oben beschriebenen Formkörper, Beschichtungsmittel und Fäden etc. können gewünschtenfalls auch Füllstoffe enthalten, die man während des Polymerisationsvorganges in irgendeiner Stufe oder nachträglich, beispielsweise in eine Schmelze der erfindungsgemäßen Polymere einarbeiten kann.

Bezogen auf die erfindungsgemäßen Polymere kann von 0 bis 80 Gew.-% Füllstoffe zusetzen. Geeignete Füllstoffe sind beispielsweise Ruß, Stärke, Ligninpulver, Cellulosefasern, Naturfasern wie Sisal und Hanf, Eisenoxide, Tonmineralien, Erze, Calciumcarbonat, Calciumsulfat, Bariumsulfat und Titandioxid. Die Füllstoffe können zum Teil auch Stabilisatoren wie Tocopherol (Vitamin E), organische Phosphorverbindungen, Mono-, Di- und Polyphenole, Hydrochinone, Diarylamine, Thioether, UV-Stabilisatoren, Nukleierungsmittel wie Talkum sowie Gleit- und Formtrennmittel auf Basis von Kohlenwasserstoffen, Fettalkoholen, höheren Carbonsäuren, Metallsalzen höherer Carbonsäuren wie Calcium- und Zinkstearat, und Montanwachsen enthalten. Solche Stabilisatoren etc. sind in Kunststoff-Handbuch, Bd. 3/1, Carl Hanser Verlag, München, 1992, S. 24 bis 28 ausführlich beschrieben.

Die erfindungsgemäßen Polymere können außerdem durch den Zusatz von organischen oder anorganischen Farbstoffen beliebig eingefärbt werden. Die Farbstoffe können im weitesten Sinne auch als Füllstoff angesehen werden.

Ein besonderes Anwendungsgebiet der erfindungsgemäßen Polymere betrifft die Verwendung als kompostierbare Folie oder einer kompostierbaren Beschichtung als Außenlage von Windeln. Die Außenlage der Windeln verhindert wirksam den Durchtritt von Flüssigkeiten, die im Innern der Windel vom Fluff und Superabsorbern, bevorzugt von bioabbaubaren Superabsorbern, beispielsweise auf Basis von vernetzter Polyacrylsäure oder vernetztem Polyacrylamid, absorbiert werden. Als Innenlage der Windel kann man ein Faservlies aus einem Cellulosematerial verwenden. Die Außenlage der beschriebenen Windeln ist biologisch abbaubar und damit kompostierbar. Sie zerfällt beim Kompostieren, so daß die gesamte Windel verrottet, während mit einer Außenlage aus beispielsweise Polyethylen versehene Windeln nicht ohne vorherige Zerkleinerung oder aufwendige Abtrennung der Polyethylenfolie kompostiert werden können.

Eine weitere bevorzugte Verwendung der erfindungsgemäßen Polymere und Formmassen betrifft die Herstellung von Klebstoffen in an sich bekannter Weise (siehe beispielsweise Encycl. of Polym. Sc. and Eng. Vol.1, "Adhesive Compositions", S. 547 bis 577). Analog zur Lehre der EP-A 21042 kann man die erfindungsgemäßen Polymere und Formmassen auch mit geeigneten klebrigmachenden thermoplastischen Harzen, bevorzugt Naturharzen, nach dort beschriebenen Methoden verarbeiten. Analog zur Lehre der DE-A 4,234,305 kann man die erfindungsgemäßen Polymere und Formmassen auch zu lösungsmittelfreien Klebstoffsystemen wie Hot-melt-Folien weiterverarbeiten.

Ein weiteres bevorzugtes Anwendungsgebiet betrifft die Herstellung vollständig abbaubarer Blends mit Stärkemischungen (bevorzugt mit thermoplastischer Stärke wie in der WO 90/05161 beschrieben) analog zu dem in der DE-A 42 37 535 beschriebenen Verfahren. Die erfindungsgemäßen Polymere kann man dabei sowohl als Granulat als auch als Polymerschmelze mit Stärkemischungen abmischen, wobei das Abmischen als Polymerschmelze bevorzugt ist, da sich hierbei ein Verfahrensschritt (Granulierung) einsparen läßt (Direktkonfektionierung). Die erfindungsgemäßen Polymere und thermoplastischen Formmassen lassen sich nach bisherigen Beobachtungen auf Grund ihrer hydrophoben Natur, ihren mechanischen Eigenschaften, ihrer vollständigen Bioabbaubarkeit, ihrer guten Verträglichkeit mit thermoplastischer Stärke und nicht zuletzt wegen ihrer günstigen Rohstoffbasis vorteilhaft als synthetische Blendkomponente einsetzen.

Weitere Anwendungsgebiete betreffen beispielsweise die Verwendung der erfindungsgemäßen Polymere in landwirtschaftlichem Mulch, Verpackungsmaterial für Saatgut und Nährstoffe, Substrat in Klebefolien, Babyhöschen, Taschen, Bettücher, Flaschen, Kartons, Staubbeutel, Etiketten, Kissenbezüge, Schutzkleidung, Hygieneartikel, Taschentücher, Spielzeug und Wischer.

Eine weitere Verwendung der erfindungsgemäßen Polymere und Formmassen betrifft die Herstellung von Schäumen, wobei man im allgemeinen nach an sich bekannten Methoden vorgeht (siehe EP-A 372,846; Handbook of Polymeric foams and Foam Technology, Hanser Publisher, München, 1991, S. 375 bis 408). Üblicherweise wird dabei das erfindungsgemäße Polymere bzw. Formmasse zunächst aufgeschmolzen, gewünschtenfalls unter Zugabe von bis zu 5 Gew.-% Verbindung D, bevorzugt Pyromellitsäuredianhydrid und Trimellitsäureanhydrid, dann mit einem Treibmittel versetzt und die so erhaltene Mischung durch Extrusion vermindertem Druck ausgesetzt, wobei die Schäumung entsteht.

Die Vorteile der erfindungsgemäßen Polymere gegenüber bekannten bioabbaubaren Polymere liegen in einer günstigen Rohstoffbasis mit gut verfügbaren Ausgangsstoffen wie Adipinsäure, Terephthalsäure und gängigen Diolen, in interessanten mechanischen Eigenschaften durch Kombination von "harten" (durch die aromatischen Dicarbonsäuren wie beispielsweise Terephthalsäure) und "weichen" (durch die aliphatischen Dicarbonsäuren, wie beispielsweise Adipinsäure) Segmenten in der Polymerkette und der Variation der Anwendungen durch einfache Modifizierungen, in einem guten Abbauverhalten durch Mikroorganismen, besonders im Kompost und im Boden, und in einer gewissen Resistenz gegenüber Mikroorganismen in wäßrigen Systemen bei Raumtemperatur, was für viele Anwendungsbereiche besonders vorteilhaft ist. Durch den statistischen Einbau der aromatischen Dicarbonsäuren der Komponenten (a1) in verschiedenen Polymeren wird der biologische Angriff ermöglicht und damit die gewünschte biologische Abbaubarkeit erreicht.

Besonders vorteilhaft an den erfindungsgemäßen Polymere ist, daß durch maßgeschneiderte Rezepturen sowohl biologisches Abbauverhalten und mechanische Eigenschaften für den jeweiligen Anwendungszweck optimiert werden können.

Des weiteren können je nach Herstellverfahren vorteilhaft Polymere mit überwiegend statistisch verteilten Monomerbausteinen, Polymere mit überwiegend Blockstrukturen sowie Polymere mit überwiegend Blendstruktur oder Blends erhalten werden.

### Beispiele

### Enzym-Test

Die Polymere wurden in einer Mühle mit flüssigem Stickstoff oder Trockeneis gekühlt und fein gemahlen (je größer die Oberfläche des Mahlguts, desto schneller der enzymatische Abbau). Zur eigentlichen Durchführung des Enzym-Tests wurden 30 mg fein gemahlenes Polymerpulver und 2 ml einer 20 mmol wäßrigen K₂HPO₄/KH₂PO₄-Pufferlösung (PH-Wert: 7,0) in ein Eppendorfreagenzgefäß (2 ml) gegeben und 3 h bei 37°C auf einem Schwenker equilibriert Anschließend wurden 100 units Lipase aus entweder Rhizopus arrhizus, Rhizopus delemar oder Pseudomonas pl. zugesetzt und 16 h bei 37°C unter Rühren (250 rpm) auf dem Schwenker inkubiert. Danach wurde die Reaktionsmischung durch eine Millipore®-Membran (0,45 µm) filtriert und der DOC (dissolved organic carbon) des Filtrats gemessen. Analog dazu wurden je eine DOC-Messung nur mit Puffer und Enzym (als Enzymkontrolle) und eine nur mit Puffer und Probe (als Blindwert) durchgeführt.

Die ermittelten ΔDOC-Werte (DOC(Probe + Enzym)-DOC(Enzymkontrolle) -DOC(Blindwert)) können als Maß für die enzymatische Abbaubarkeit der Proben angesehen werden. Sie sind jeweils im Vergleich zu einer Messung mit Pulver von Polycaprolacton® Tone P 787 (Union Carbide) dargestellt. Bei der Bewertung ist darauf zu achten, daß es sich nicht um absolut quantifizierbare Daten handelt. Auf den Zusammenhang zwischen Oberfläche des Mahlguts und Schnelligkeit des enzymatischen Abbaus wurde weiter oben bereits hingewiesen. Des weiteren können auch die Enzymaktivitäten schwanken.

Die Durchlässigkeit und Permeabilität gegenüber Sauerstoff wurde gemäß DIN 53380 diejenige gegenüber Wasserdampf gemäß DIN 53122 bestimmt.

Die Molekulargewichte wurden mittels Gelpermeationschromatographie (GPC) gemessen:

| | |
|---|---|
| stationäre Phase | 5 MIXED B-Polystyrolgelsäulen (7,5x300 mm, PL-gel 10 µ) der Fa. Polymer Laboratories; Temperierung: 35°C. |
| mobile Phase | Tetrahydrofuran (Fluß: 1,2 ml/min) |
| Eichung | Molgewicht 500-10000000 g/mol mit PS-Eichkit der Fa. Polymer Laboratories. |

Im Oligomerbereich Ethylbenzol/1,3-Diphenylbutan/1,3,5-Triphenylhexan/1,3,5,7-Tetraphenyloktan/1,3,5,7,9-Pentaphenyldekan

### Detektion: RI (Brechungsindex) Waters 410 UV (bei 254 nm) Spectra Physics 100

Die Bestimmungen der Hydroxyl-Zahl (OH-Zahl) und Säure-Zahl (SZ) erfolgten nach folgenden Methoden:
(a) Bestimmung der scheinbaren Hydroxyl-Zahl Zu ca. 1 bis 2 g exakt einqewogener Prüfsubßtanz wurden 10 ml Toluol und 9,8 ml Acetylierungsreagenz (s.u.) gegeben und 1 h bei 95°C unter Rühren erhitzt. Danach wurden 5 ml dest. Wasser zugeführt. Nach Abkühlen auf Raumtemperatur wurden 50 ml Tetrahydrofuran (THF) zugesetzt und mit ethanolischer KOH-Maßlösung gegen Wendepunkt potentiographisch titriert.
   Der Versuch wurde ohne Prüfsubstanz wiederholt (Blindprobe).
   Die scheinbare OH-Zahl wurde dann aufgrund folgender Formel ermittelt:
   scheinb. OH-Zahl c·t·56,1·(V2-V1)/m (in mg KOH/g)
   wobei c = Stoffmengenkonzentration der ethanol. KOH-Maßlösung in mol/l,
   t = Titer der ethanol. KOH-Maßlösung
   m = Einwaage in mg der Prüfsubstanz
   V1 = Verbrauch der Maßlösung mit Prüfsubstanz in ml
   V2 = Verbrauch der Maßlösung ohne Prügsubstanz in ml
   bedeuten.
   Verwendete Reagenzien:
   ethanol. KOH-Maßlösung, c = 0,5 mol/l, Titer 0,9933 (Merck, Art.Nr. 1.09114)
   Essigsäureanhydrid p.A. (Merck, Art.Nr. 42)
   Pyridin p.A. (Riedel de Haen, Art.-Nr 33638)
   Essigsäure p.A. (Merck, Art.Nr. 1.00063)
   Acetylierungsreagenz: 810 ml Pyridin, 100 ml
      Essigsäureanhydrid und 9 ml
      Essigsäure
   Wasser, deionisiert
   THF und Toluol
(b) Bestimmung der Säurezahl (SZ)
   Ca. 1 bis 1,5 g Prüfsubstanz wurden exakt eingewogen und mit 10 ml Toluol und 10 ml Pyridin versetzt und anschließend auf 95°C erhitzt. Nach dem Lösen wurde auf Raumtemperatur abgekühlt, 5 ml Wasser und 50 ml THF zugegeben und mit 0,1 N ethanol. KOHMaßlösung titriert.
   Die Bestimmung wurde ohne Prüfsubstanz wiederholt (Blindprobe)
   Die Säure-Zahl wurde dann aufgrund folgender Formel ermittelt:
   SZ = c·t·56,1·(V1-V2)/m (in mg KOH/g) wobei
   c =Stoffmengenkonzentration der ethanol. KOH-Maßlösung in mol/l,
   t = Titer der ethanol. KOH-Maßlösung
   m = Einwaage in mg der Prüfsubstanz
   V1 = Verbrauch der Maßlösung mit Prüfsubstanz in ml
   V2 = Verbrauch der Maßlösung ohne Prüfsubstanz in ml
   bedeuten.
   Verwendete Reagenzien:
   ethanol. KOH-Maßlösung, c = 0,1 mol/l, Titer = 0,9913 (Merck, Art.Nr. 9115)
   Pyridin p.A. (Riedel de Haen, Art.Nr. 33638)
   Wasser, deionisiert
   THF und Toluol
(c) Bestimmung der OH-Zahl
   Die OH-Zahl ergibt sich aus der Summe der scheinbaren OH-Zahl und der SZ:
   OH-Zahl = scheinb. OH-Zahl + SZ

### Verwendete Abkürzungen:

| | |
|---|---|
| DOC | dissolved organic carbon |
| DMT | Dimethylterephthalat |
| PCL | Polycaprolacton® Tone P 787 (Union Carbide) |
| PMDA | Pyrromellitsäuredianhydrid |
| SZ | Säurezahl |
| TBOT | Tetrabutylorthotitanat |
| VZ | Viskositätszahl (gemessen in o-Dichlorbenzol/Phenol (Gew.-Verhältnis 50/50) bei einer Konzentration von 0,5 Gew.-% Polymer bei einer Temperatur von 25°C |
| Tₘ | "Schmelztemperatur" = Temperatur, bei der ein maximaler endothermer Wärmefluß auftritt (Extremum der DSC-Kurven) |
| Tg | Glasübergangstemperatur (midpoint der DSC-Kurven) |

Die DSC-Messungen wurden mit einem DSC-Gerät 912+Thermal Analyzer 990 der Fa. DuPont durchgeführt. Die Temperatur- und Enthalpiekalibrierung erfolgte in üblicher Weise. Die Probeneinwaage betrug typischerweise 13 mg. Heiz- und Kühlraten betrugen - außer wenn anders vermerkt - 20 K/min. Die Proben wurden unter folgenden Bedingungen vermessen: 1. Aufheizender Lauf an Proben im Anlieferungszustand, 2. Schnelles Abkühlen aus der Schmelze, 3. Aufheizender Lauf an aus der Schmelze abgekühlten Proben (Proben aus 2). Die jeweils zweiten DSC-Läufe dienten dazu, nach Einprägen einer einheitlichen thermischen Vorgeschichte, einen Vergleich zwischen den verschiedenen Proben zu ermöglichen.

### Herstellung der Polyester P1

### Beispiel 1

4672 kg 1,4 Butandiol, 7000 kg Adipinsäure und 50 g Zinn-dioctoat wurden in einer Stickstoffatmosphäre bei einer Temperatur im Bereich von 230 bis 240°C zur Reaktion gebracht. Nach Abdestillieren der Hauptmenge des bei der Umsetzung gebildeten Wassers, wurden 10 g TBOT zur Reaktionsmischung gegeben. Nachdem die Säurezahl unter den Wert 1 gesunken ist, wurde unter vermindertem Druck überschüssiges 1,4-Butandiol solange abdestilliert, bis eine OH-Zahl von 56 erreicht war.

### Beispiel 2

360,4 g des in Beispiel 1 hergestellten Polymers, 227,2 g DMT, 340 g 1,4-Butandiol und 1 g TBOT wurden in einer Stickstoffatmosphäre unter langsamen Rühren auf 180°C erhitzt. Dabei wurde das während der Umesterungsreaktion gebildete Methanol abdestilliert. Innerhalb von 2 h wurde auf 230°C erhitzt, dann 6,54 g Pyromellitsäuredianhydrid zugegeben und nach einer weiteren Stunde 0,4 g einer 50 gew.-%igen wäßrigen Lösung von phosphoriger Säure. Danach wurde innerhalb von 1 h der Druck auf 5 mbar abgesenkt und bei 240°C noch eine weitere Stunde bei einem Druck unter 2 mbar gehalten, wobei das im Überschuß eingesetzte 1,4-Butandiol abdestilliert wurde.

| | |
|---|---|
| OH-Zahl | 16 mg KOH/g |
| SZ-Zahl | <1 mg KOH/g |
| VZ | 134,5 g/ml |
| Tₘ | 94 °C (DSC, Anlieferungszustand) |
| Tg | -41°C (DSC, Anlieferungszustand) |

Enzym-Test mit Rhizopus arrhizus, ΔDOC: 571 mg/l zum Vergleich mit PCL: ΔDOC: 4044 mg/l

### Beispiel 3

Analog zu Beispiel 2 wurden 372,4 g des Polymers von Beispiel 1, 215,6 g DMT, 340 g 1,4 Butandiol, 5,8 g 1,2,4-Benzoltricarbonsäure-1,2anhydrid, 1,0 g TBOT und 0,4 g einer 50 gew.-%igen wäßrigen Lösung von phosphoriger Säure umgesetzt, wobei die Zugabe von 1,2,4-Benzoltricarbonsäure-1,2-anhydrid bereits zu Anfang der Umsetzung erfolgte.

| | |
|---|---|
| 0H-Zahl | 16 mg KOH/g |
| SZ-Zahl | 0,8 mg KOH/g |
| VZ | 71,4 g/ml |
| Tₘ | 89 C (DSC, Anlieferungszustand) |
| Tg | -43°C (DSC, Anlieferungszustand) |

### Beispiel 4

Analog zu Beispiel 3 wurden 372,4 g des Polymers von Beispiel 1, 215,6 g DMT, 340 g 1,4 Butandiol, 6,3 g 1,3,5-Benzoltricarbonsäure, 1,0 g TBOT und 0,4 g einer 50 gew.-%igen wäßrigen Lösung von phosphoriger Säure umgesetzt.

| | |
|---|---|
| OH-Zahl | 18 mg KOH/g |
| SZ-Zahl | 1,3 mg KOH/g |
| VZ | 61,3 g/ml |
| Tₘ | 89°C (DSC, Anlieferungszustand) |
| Tg | -43,5°C (DSC, Anlieferungszustand) |

### Beispiel 5

Analog zu Beispiel 3 wurden 360,4 g des Polymers von Beispiel 1, 221,4 g DMT, 340 g 1,4 Butandiol, 11,5 g 1,2,4-Benzoltricarbonsäure-1,2-anhydrid, 1,0 g TBOT und 0,4 g einer 50 gew.-%igen wäßrigen Lösung von phosphoriger Säure umgesetzt.

| | |
|---|---|
| OH-Zahl | 18 mg KOH/g |
| SZ-Zahl | 1,3 mg KOH/g |
| VZ | 80,4 g/ml |
| Tₘ | 89°C (DSC, Anlieferungszustand) |
| Tg | -42 °C (DSC, Anlieferungszustand) |

### Beispiel 6

Analog zu Beispiel 3 wurden 360 g des Polymers von Beispiel 1, 233 g DMT, 340 g 1,4-Butandiol, 4,1 g einer Mischung aus 85 bis 92 Gew.-% Pentaerythrit und 8 bis 15 Gew.-% Dipentaerythrit, 1,0 g TBOT, und 0,4 g einer 50 gew.-%igen wäßrigen Lösung von phosphoriger Säure umgesetzt.

| | |
|---|---|
| OH-Zahl | 22 mg KOH/g |
| SZ-Zahl | 0,8 g KOH/g |
| VZ | 68,24 g/ml |
| Tₘ | 88,5°C (DSC, Anlieferungszustand) |
| T_{g} | -44°C (DSC, Anlieferungszustand) |

### Beispiel 7

Analog zu Beispiel 3 wurden 360 g des Polymers von Beispiel 1, 340 g 1,4-Butandiol, 8 g Sulfoisophthalsäure-Natriumsalz, 0,65 g PMDA, 1,0 g TBOT, und 0,4 g einer 50 gew.-%igen wäßrigen Lösung von phosphoriger Säure umgesetzt, wobei die Zugabe des Sulfoisophthalsäure-Natriumsalzes bereits zu Anfang der Umsetzung erfolgte.

| | |
|---|---|
| OH-Zahl | 10 mg KOH/g |
| SZ-Zahl | 2,4 g KOH/g |
| VZ | 64,56 g/ml |
| Tₘ | 92°C (DSC, Anlieferungszustand) |
| T_{g}: | 40°C (DSC, Anlieferungszustand) |

### Beispiel 8

341,2 g DMT, 646 g 1,4-Butandiol, 0,65 g PMDA, 1,0 g TBOT wurden in einen Dreihalskolben gegeben und unter Stickstoffatmosphäre unter langsamem Rühren auf 180°c erhitzt. Dabei wurde das während der Umsetzungsreaktion gebildete Methanol abdestilliert. Nach Zugabe von 313 g Adipinsäure wurde innerhalb von 2 h unter Erhöhung der Rührgeschwindigkeit auf 23°C erhitzt, wobei das während der Umsetzung gebildete wasser abdestilliert wurde. Nach einer weiteren Stunde wurden noch 0,4 g einer 50 gew.-%igen wäßrigen phosphorigen Säure zugegeben. Danach wurde innerhalb von 1 h der Druck auf 5 mbar gesenkt und bei 240°C noch 1 h bei einem Druck < 2 mbar erhitzt, wobei das im Überschuß eingesetzte 1,4-Butandiol abdestilliert wurde.

| | |
|---|---|
| OH-Zahl | 19 mg KOH/g |
| SZ | 0,2 g KOH/g |
| VZ | 48,6 g/ml |
| Tₘ | 109,5°C (DSC, Anlieferungszustand) |
| T_{g} | -28°C (DSC, Anlieferungszustand) |

### Beispiel 9

(a) Analog zu Beispiel 2 wurden 362 g des Polymers von Beispiel 1, 234 g DMT, 340 g 1,4-Butandiol, 1 g TBOT und 0,4 g einer 50 gew.-%igen wäßrigen phosphorigen Säure umgesetzt,

| | |
|---|---|
| OH-Zahl | 20 mg KOH/g |
| SZ | 0,8 g KOH/g |
| VZ | 42 g/ml |

(b) 120 g des Polymers von Beispiel 10(a) wurden mit 60 g Polylactid und 0,75 g PMDA unter Stickstoffatmosphäre auf 180°C erhitzt und 2 gerührt. Anschließend wurden innerhalb von 15 min 1,68 g Hexamethylendiisocyanat ("HDI") zugegeben und noch weitere 30 min weitergerührt.

| Produkt vor HDI-Zugabe: | |
|---|---|
| VZ | 48 g/ml |

| Produkt nach HDI-Zugabe: | |
|---|---|
| VZ | 65 g/ml |
| Tₘ | 95,5°C, 143°C, 151,8°C (DSC, von 200°C schnell abgekühlt) |
| Tg | -30°C, 48,5°C (DSC, von 200°C schnell abgekühlt) |

### Beispiel 10

30 g des Polymeren von Beispiel 10(a) wurden mit 120 g Polycaprolacton und 0,75 g Pyromellitsäuredianhydrid unter Stickstoffatmosphäre auf 180°C aufgeheizt und 2 Stunden gerührt. Anschließend wurden innerhalb von 15 min 1,74 g Hexamethylendiisocyanat zugegeben und noch 30 min weitergerührt.

| Produkt vor HDI-Zugabe: | |
|---|---|
| VZ | 76 g/ml |

| Produkt nach HDI-Zugabe: | |
|---|---|
| VZ | 213 g/l |
| Tg | -48°C (DSC, Anlieferungszustand) |
| Tₘ | 53,3°C, 91,5°C (DSC, Anlieferungszustand) |

### Beispiel 11

1,81 kg des Polymers von Beispiel 1, 1,17 kg DMT, 1,7 kg 1,4-Butandiol, 4,7 g TBOT, 6,6 g PMDA, und 1,9 g 50 %ige wäßrige phosphorige Säure wurden analog zu Beispiel 2 umgesetzt, wobei nach Beendigung der Umsetzung die Schmelze unter Rühren und unter Stickstoffatmosphäre auf 200°C abgekühlt wurde. Dann erfolgte die Zugabe von 15 g Hexamethylendiisocyanat in 4 Portionen innerhalb von 40 min. Der Polyester konnte granuliert und zu Blasfolien verarbeitet werden.
OH-Zahl: 2 mg KOH/g
SZ: 5,5 mg KOH/g
GPC : Mₙ = 14320, M_{w} = 98350 (UV-Detektor, 254 nm, Spectra Physics 100)
Tₘ:98°C, Tg: -31°C (DSC, von 190°C schnell abgekühlt)
Enzym-Test mit Rhizopus arrhizus: ΔDOC: 264 mg/l (Folie)/ΔDOC-(PCL-Pulver):2588 mg/l

Folieneigenschaften:
- Foliendicke: ca. 50 µm, Aufblasverhältnis: 1:2
- Reißfestigkeit (DIN 53455) längs: 27,9/quer: 28,2 N/mm²
- Reißdehnung (DIN 53455) längs: 733 %/quer: 907 %

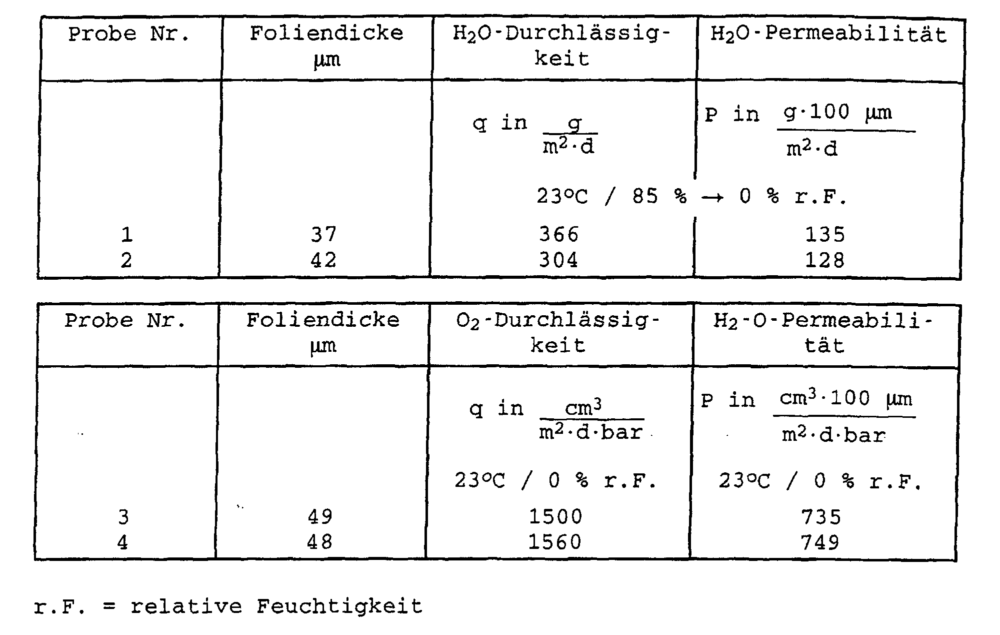

### Beispiel 12

16,52 kg des Polymers von Beispiel 1 13,1 kg DMT, 17 kg 1,4-Butandiol, 47 g TBOT, 16,5 g PMDA, und 19 g 50 %ige wäßrige phosphorige Säure wurden analog Beispiel 2 umgesetzt, wobei nach Beendigung der Umsetzung die Schmelze unter Rühren und unter Stickstoffatmosphäre auf 200°C abgekühlt wurde. Dann erfolgte die Zugabe von 290 g Hexamethylendiisocyanat in 5 Portionen innerhalb von 40 min. Der Polyester konnte granuliert werden.

| | |
|---|---|
| OH-Zahl | 2 mg KOH/g |
| SZ | 4,1 mg KOH/g |
| GPC | Mₙ = 17589, M_{w} = 113550 (UV-Detektor, 254 nm, Spectra Physics 100) |
| Tₘ | 108,3°C |
| Tg | -25,6°C (DSC, von 190°C schnell abgekühlt) |

### Beispiel 13

Die Herstellung eines Blends aus Stärke und dem Polyester aus Beispiel 12 erfolgte in einem gleichsinnig drehenden Zweiwellenextruder (L/D-Verhältnis: 37) mit ca. 30 kg/h Durchsatz bei 50-220°C. Zunächst wurde die native Kartoffelstärke mit Glycerin plastifiziert und die erhaltene destrukturierte, thermoplastische Stärke entgast. Durch Zumischung des Polymeren aus Beispiel 13 als Granulat über einen gleichsinnig drehenden zweiwelligen Seitenextruder (L/D-Verhältnis: 21) wurde ein Stärkeblend erhalten, der granuliert und zu Blasfolien verarbeitet werden konnte.

Zusammensetzung Stärkeblend:
- 10 kg/h Perfectamyl D 6 (Fa. AVEBE; native Kartoffelstärke mit einem Wassergehalt von 6-10 Gew.-%)
- 6 kg/h Glycerin
- 14 kg/h Polymer aus Beispiel 13
- 0,15 kg/h Erucasäureamid
- 0,15 kg/h Loxiol G 31

Loxiol G 31: flüssiger neutraler Fettsäureester, Stockpunkt < 19°C,
Dichte: 0,853-0,857 g/cm³ (20°C), Fa. Henkel

Folieneigenschaften:
- Foliendicke: ca. 100 µm, Aufblasverhältnis: ca. 1:2
- Reißfestigkeit (DIN 53455) längs: 16,6/quer: 10,0 N/mm²
- Reißdehnung (DIN 53455) längs: 789 %/quer: 652 %

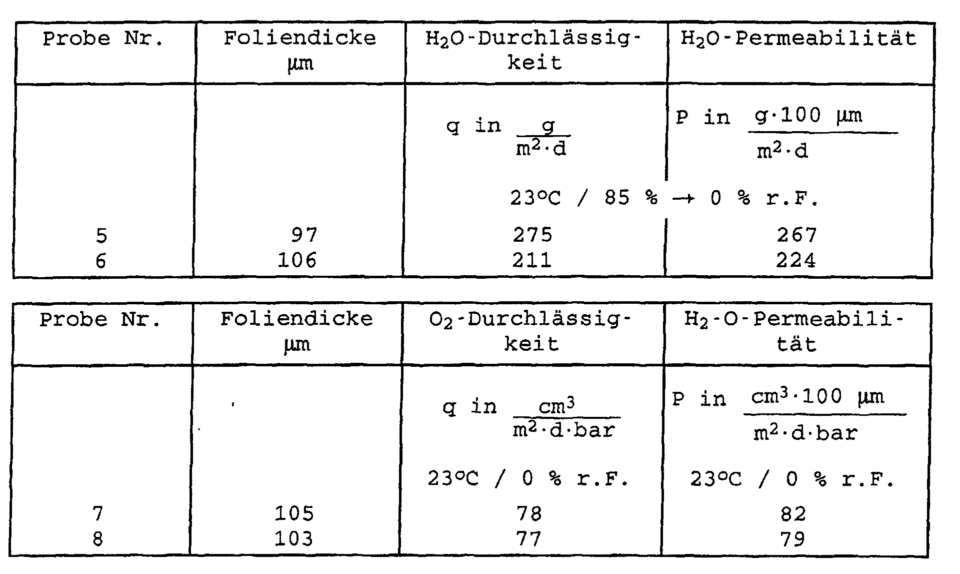

### Beispiel 14

120 kg des Polymeren aus Beispiel 1 77,68 kg DMT, 112,5 kg 1,4-Butandiol und 311 g TBOT wurden in einen Reaktor gegeben und unter Stickstoffatmosphäre mit langsamen Rühren auf 180°C erhitzt. Dabei wurde das während der Umesterungsreaktion gebildete Methanol abdestilliert. Innerhalb von 2 h wurde unter Erhöhung der Rührgeschwindigkeit auf 230°C erhitzt, 110 g Pyromellitsäuredianhydrid zugegeben und nach einer weiteren Stunde noch 125 g 50 gew.-%ige wäßrige phosphorige Säure. Innerhalb von 1,5 h wurde der Druck auf 5 mbar abgesenkt und bei 240°C noch 2 h < 2 mbar gehalten, wobei das im Überschuß eingesetzte 1,4-Butandiol abdestilliert wurde. Nach Beendigung der Umsetzung wurde die Schmelze unter Rühren und unter Stickstoffatmosphäre auf 200°C abgekühlt. Dann erfolgte die Zugabe von 2,3 kg Hexamethylendiisocyanat kontinuierlich innerhalb von 60 min. Nach weiteren 30 min wurde der Polyester ausgefahren.

| | |
|---|---|
| OH-Zahl | 3 mg KOH/G |
| SZ | 3,7 mg/KOH/g |
| GPC | Mₙ = 15892, M_{w} = 77920 (UV-Detektor, 254 nm, Spectra Physics 100) |
| Tₘ | 97,6°C |
| Tg | -29,3°C (DSC, von 190°C schnell abgekühlt) |

### Beispiel 15

Die Herstellung eines Blends aus Stärke und dem Polymer aus Beispiel 15 erfolgte in einem gleichsinnig drehenden Zweiwellenextruder (L/D-Verhältnis: 37) mit ca. 30 kg/h Durchsatz bei 50-220°C. Zunächst wurde die native Kartoffelstärke mit der Glycerin-MSA-Mischung plastifiziert und die erhaltene destrukturierte, thermoplastische Stärke entgast. Durch direkte Zumischung des Polymers aus Beispiel 15 als Polymerschmelze (ohne vorherige Isolierung als Granulat etc.) über einen gleichsinnig drehenden zweiwelligen Seitenextruder (L/D-Verhältnis: 22, Temperaturführung: 50-150°C) wurde ein Stärkeblend erhalten, der granuliert und zu Blasfolien verarbeitet werden konnte. Vorteile: Einsparung von einem Verfahrensschritt, besonders hohe Wasserresistenz der Folie durch Morphologie des Blends

Zusammensetzung Stärkeblend:
- 10 kg/h Perfectamyl D 6 (Fa. AVEBE; native Kartoffelstärke mit einem Wassergehalt von 6-10 Gew.-%)
- 6 kg/h Mischung: Glycerin + 0,5 Gew.-% Maleinsäureanhydrid
- 14 kg/h Polymer von Beispiel 15
- 0,15 kg/h Erucasäureamid
- 0,15 kg/h Loxiol G 31

## Patentansprüche

1. Biologisch abbaubare Polyester P1, erhältlich durch Reaktion einer Mischung, bestehend im wesentlichen aus
(a1) einer Mischung, bestehend im wesentlichen aus
45 bis 80 mol-% Adipinsäure oder esterbildende Derivate davon oder Mischungen davon,
20 bis 55 mol-% Terephthalsäure oder esterbildende Derivate davon oder Mischungen davon, und
0 bis 5 mol-% einer sulfonatgruppenhaltigen Verbindung,
(a2) einer Dihydroxyverbindung, ausgewählt aus der Gruppe bestehend aus C₂-C₆-Alkandiolen und C₅-C₁₀-Cycloalkandiolen,
wobei man das Molverhältnis von (a1) zu (a2) im Bereich von 0,4:1 bis 1,5:1 wählt, mit der Maßgabe, daß die Polyester P1 ein Molekulargewicht (Mₙ) im Bereich von 5000 bis 50000 g/mol, eine Viskositätszahl im Bereich von 30 bis 350 g/ml (gemessen in o-Dichlorbenzol/Phenol (Gew.-Verhältnis 50/50) bei einer Konzentration von 0,5 Gew.-% Polyester P1 bei einer Temperatur von 25°C) und einen Schmelzpunkt im Bereich von 50 bis 170°C aufweisen, und mit der weiteren Maßgabe, daß man von 0,01 bis 5 mol-%, bezogen auf die Molmenge der eingesetzten Komponente (a1), einer Verbindung D mit mindestens drei zur Esterbildung befähigten Gruppen zur Herstellung der Polyester P1 einsetzt.

2. Biologisch abbaubare Polyester Q1, erhältlich durch Reaktion einer Mischung bestehend im wesentlichen aus
(c1) Polyester P1 , gemäß Anspruch 1
oder Polyester P1 und einem Polyester PWD,
(c2) 0,01 bis 50 Gew.-%, bezogen auf (c1), Hydroxycarbonsäure B1, wobei die Hydroxycarbonsäure B1 definiert ist.durch die Formeln Ia oder Ib 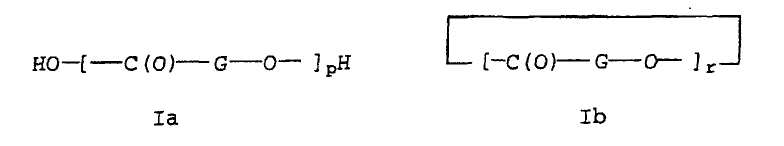 in deren p eine ganze Zahl von 1 bis 1500 und r eine ganze Zahl von 1 bis 4 bedeuten, und G für einen Rest steht, der ausgewählt ist aus der Gruppe bestehend aus Phenylen, -(CH₂)ₙ-, wobei n eine ganze Zahl von 1 bis 5 bedeutet, -C(R)Hund -C(R)HCH₂, wobei R für Methyl oder Ethyl steht, und
(c3) 0 bis 5 mol-%, bezogen auf Komponente (a1) aus der Herstellung von P1 und/oder PWD, Verbindung D, gemäß Anspruch 1, wobei der Polyester PWD erhältlich ist durch Reaktion von im wesentlichen den Komponenten (a1) und (a2), wobei man das Molverhältnis von (a1) zu (a2) im Bereich von 0,4:1 bis 1,5:1 wählt, mit der Maßgabe, daß die Polyester PWD ein Molekulargewicht (Mₙ) im Bereich von 5000 bis 50000 g/mol, eine Viskositätszahl im Bereich von 30 bis 350 g/ml (gemessen in o-Dichlorbenzol/Phenol (Gew.- Verhältnis 50/50) bei einer Konzentration von 0,5 Gew.-% Polyester PWD bei einer Temperatur von 25°C) und einen Schmelzpunkt im Bereich von 50 bis 170°C aufweisen, wobei die Polyester Q1 ein Molekulargewicht (Mₙ) im Bereich von 5000 bis 100000 g/mol, eine Viskositätszahl im Bereich von 30 bis 450 g/ml (gemessen in o-Dichlorbenzol/Phenol (50/50 Gew.-Verhältnis) bei einer Konzentration von 0,5 Gew.-% Polyester Q1 bei einer Temperatur von 25°C) und einen Schmelzpunkt im Bereich von 50 bis 235°C aufweisen.

3. Biologisch abbaubare Polyester Q2 mit einem Molekulargewicht (Mₙ) im Bereich von 6000 bis 60000 g/mol, einer Viskositätszahl im Bereich von 30 bis 350 g/ml (gemessen in o-Dichlorbenzol/Phenol (50/50 Gew.-%) bei einer Konzentration von 0,5 Gew.-% Polyester Q2 bei einer Temperatur von 25°C) und einem Schmelzpunkt im Bereich von 50 bis 170°C, erhältlich durch Reaktion einer Mischung bestehend im wesentlichen aus
(d1) von 95 bis 99,9 Gew.-% Polyester P1, gemäß Anspruch 1, oder Polyester P1 und Polyester PWD, gemäß Anspruch 2,
(d2) von 0,1 bis 5 Gew.-% eines Diisocyanats C1 und
(d3) von 0 bis 5 mol-%, bezogen auf Komponente (a1) aus der Herstellung von P1 und/oder PWD, gemäß Anspruch 2, Verbindung D mit mindestens drei zur Esterbildung befähigten Gruppen.

4. Biologisch abbaubare Polymere T1 mit einem Molekulargewicht (Mₙ) im Bereich von 10 000 bis 100 000 g/mol, mit einer Viskositätszahl im Bereich von 30 bis 450 g/ml (gemessen in o-Dichlorbenzol/Phenol (Gew.-Verhältnis 50/50) bei einer Konzentration von 0,5 Gew.-% Polymer T1 bei einer Temperatur von 25°C) und einem Schmelzpunkt im Bereich von 50 bis 235°C, erhältlich durch Umsetzung des Polyesters Q1 gemäß Anspruch 2 mit (e1) 0,1 bis 5 Gew.-%, bezogen auf den Polyester Q1, Diisocyanat C1 sbwie mit (e2) 0 bis 5 mol-%, bezogen auf Komponente (a1) aus der Herstellung von Polyester Q1 über den Polyester P1, gemäß Anspruch 1 und/oder PWD, gemaß Anspruch 2, Verbindung D mit mindestens drei zur Esterbildung befähigten Gruppen.

5. Biologisch abbaubare Polymere T2 mit einem Molekulargewicht (Mₙ) im Bereich von 10.000 bis 100.000 g/mol, mit einer Viskositätszahl im Bereich von 30 bis 450 g/ml (gemessen in o-Dichlorbenzol/Phenol (Gew.-Verhältnis 50/50) bei einer Konzentration von 0,5 Gew.-% Polymer T2 bei einer Temperatur von 25°C) und einem Schmelzpunkt im Bereich von 50 bis 235°C, erhältlich durch Umsetzung des Polyesters Q2 mit
(f1) 0,01 bis 50 Gew.-%, bezogen auf Polyester Q2, Hydroxycarbonsäure B1 sowie mit
(f2) 0 bis 5 mol-%, bezogen auf Komponente (a1) aus der Herstellung von Polyester Q2 über den Polyester P1, gemäß Anspruch 1 und/oder PWD, gemäß Anspruch 2, Verbindung D mit mindestens drei zur Esterbildung befähigten Gruppen.

6. Biologisch abbaubare Polymere T3 mit einem Molekulargewicht (Mₙ) im Bereich von 10.000 bis 100.000 g/mol, mit einer Viskositätszahl im Bereich von 30 bis 450 g/ml (gemessen in o-Dichlorbenzol/Phenol (Gew.-Verhältnis 50/50) bei einer Konzentration von 0,5 Gew.-% Polymer T3 bei einer Temperatur von 25°C) und einem Schmelzpunkt im Bereich von 50 bis 235°C, erhältlich durch Umsetzung von
(g1) einer Mischung bestehend im wesentlichen aus Polyester P1, gemäß Anspruch 1 und 0,01 bis 50 Gew.-%, bezogen auf Polyester P1, Hydroxycarbonsäure B1, oder
(g2) einer Mischung bestehend im wesentlichen aus Polyestern P1, die eine unterschiedliche Zusammensetzung voneinander aufweisen,
mit 0,1 bis 5 Gew.-%, bezogen auf die Menge der eingesetzten Polyester, Diisocyanat C1 sowie
mit 0 bis 5 mol-%, bezogen auf die jeweiligen Molmengen an Komponente (a1), die zur Herstellung der eingesetzten Polyester (g1) bis (g2) eingesetzt wurden, Verbindung D mit mindestens drei zur Esterbildung befähigten Gruppen.

7. Biologisch abbaubare thermoplastische Formmassen T4, erhältlich durch Mischen in an sich bekannter Weise von
(h1) 99,5 bis 0,5 Gew.-% Polyester P1 gemäß Anspruch 1 oder Polyester Q2, gemäß Anspruch 3 mit
(h2) 0,5 bis 99,5 Gew.-% Hydroxycarbonsäure B1.

8. Verfahren zur Herstellung der biologisch abbaubaren Polyester P1 gemäß Anspruch 1 in an sich bekannter Weise, **dadurch gekennzeichnet, daß** man eine Mischung, bestehend im wesentlichen aus
(a1) einer Mischung, bestehend im wesentlichen aus
45 bis 80 mol-% Adipinsäure oder esterbildende Derivate davon oder Mischungen davon, 20 bis 55 mol-% Terephthalsäure oder esterbildende Derivate davon oder Mischungen davon, und
0 bis 5 mol-% einer sulfonatgruppenhaltigen Verbindung,
(a2) einer Dihydroxyverbindung, ausgewählt aus der Gruppe bestehend aus C₂-C₆-Alkandiolen und C₅-C₁₀-Cycloalkändiolen,
wobei man das Molverhältnis von (a1) zu (a2) im Bereich von 0,4:1 bis 1,5:1 wählt, und von 0,01 bis 5 mol-%, bezogen auf die Molmenge der eingesetzten Komponente (a1), einer Verbindung D mit mindestens drei zur Esterbildung befähigten Gruppen zur Reaktion bringt.

9. Verfahren zur Herstellung der biologisch abbaubaren Polyester Q1, gemäß Anspruch 2 in an sich bekannter Weise, **dadurch gekennzeichnet, daß** man eine Mischung, bestehend im wesentlichen aus
(c1) Polyester P1, gemäß Anspruch 1, oder Polyester P1 und einem Polyester PWD, gemäß Anspruch 2,
(c2) 0,01 bis 50 Gew.-%, bezogen auf (c1), Hydroxycarbonsäure B1, wobei die Hydroxycarbonsäure B1 definiert ist durch die Formeln Ia oder Ib 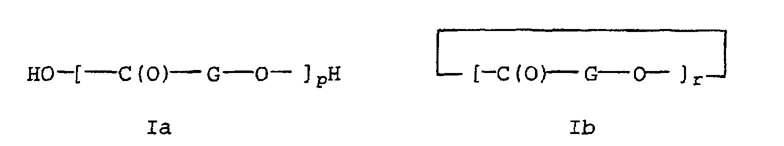 in deren p eine ganze Zahl von 1 bis 1500 und r eine ganze Zahl von 1 bis 4 bedeuten, und G für einen Rest steht, der ausgewählt ist aus der Gruppe bestehend aus Phenylen, -(CH₂)ₙ-, wobei n eine ganze Zahl von 1 bis 5 bedeutet, -C(R)Hund -C(R)HCH₂, wobei R für Methyl oder Ethyl steht, und
(c3) 0 bis 5 mol-%, bezogen auf Komponente (a1) aus der Herstellung von P1 und/oder PWD, Verbindung D, gemäß Anspruch 1,
zur Reaktion bringt.

10. Verfahren zur Herstellung der biologisch abbaubaren Polyester Q2 gemäß Anspruch 3 in an sich bekannter Weise, **dadurch gekennzeichnet, daß** man eine Mischung, bestehend im wesentlichen aus
(d1) von 95 bis 99,9 Gew.-% Polyester P1, gemäß Anspruch 1, oder Polyester P1 und Polyester PWD, gemäß Anspruch 2,
(d2) von 0,1 bis 5 Gew.-% eines Diisocyanats C1 und
(d3) von 0 bis 5 mol-%, bezogen auf Komponente (a1) aus der Herstellung von P1 und/oder PWD, gemäß Anspruch 2, Verbindung D
zur Reaktion bringt.

11. Verfahren zur Herstellung der biologisch abbaubaren Polymeren T1 gemäß Anspruch 4 in an sich bekannter Weise, **dadurch gekennzeichnet, daß** man Polyester Q1, gemäß Anspruch 2 mit (e1) 0,1 bis 5 Gew.-%, bezogen auf den Polyester Q1, Diisocyanat C1 sowie mit (e2) 0 bis 5 mol-%, bezogen auf Komponente (a1) aus der Herstellung von Polyester Q1 über Polyester P1, gemäß Anspruch 1 und/oder PWD, gemäß Anspruch 2, Verbindung D mit mindestens drei zur Esterbildung befähigten Gruppen-zur Reaktion bringt.

12. Verfahren zur Herstellung der biologisch abbaubaren Polymeren T2 gemäß Anspruch 5 in an sich bekannter Weise, **dadurch gekennzeichnet, daß** man
Polyester Q2, gemäß Anspruch 3 mit
(f1) 0,01 bis 50 Gew.-%, bezogen auf Polyester Q2, Hydroxycarbonsäure B1 sowie mit
(f2) 0 bis 5 mol-%, bezogen auf Komponente (a1) aus der Herstellung von Polyester Q2 über Polyester P1, gemäß Anspruch 1 und/oder PWD, gemäß Anspruch 2, Verbindung D,
zur Reaktion bringt.

13. Verfahren zur Herstellung der biologisch abbaubaren Polymeren T3 gemäß Anspruch 6 in an sich bekannter Weise, **dadurch gekennzeichnet, daß** man
(g1) eine Mischung, bestehend im wesentlichen aus Polyester P1, gemäß Anspruch 1 und 0,01 bis 50 Gew.-%, bezogen auf Polyester P1, Hydroxycarbonsäure B1, oder
(g2) eine Mischung, bestehend im wesentlichen aus Polyestern P1, die eine unterschiedliche ZusammenSetzung voneinander aufweisen,
mit 0,1 bis 5 Gew.-%, bezogen auf die Menge der eingesetzten Polyester, Diisocyanat C1 sowie
mit 0 bis 5 mol-%, bezogen auf die jeweiligen Molmengen an Komponente (a1), die zur Herstellung der eingesetzten Polyester (g1) bis (g2) eingesetzt wurden, Verbindung D, gemäß Anspruch 1, zur Reaktion bringt.

14. Verfahren zur Herstellung der biologisch abbaubaren thermoplastischen Formmassen T4 gemäß Anspruch 7 in an sich bekannter Weise, **dadurch gekennzeichnet, daß** man 99,5 bis 0,5 Gew.-% Polyester P1, gemäß Anspruch 1 oder Polyester Q2, gemäß Anspruch 3 mit 0,5 bis 99,5 Gew.-% Hydroxycarbonsäure B1 mischt.

15. Verwendung der biologisch abbaubaren Polymere gemäß den Ansprüchen 1 bis 6 oder der thermoplastischen Formmassen gemäß Anspruch 7 oder hergestellt gemäß den Ansprüchen 8 bis 14 zur Herstellung von kompostierbaren Formkörpern.

16. Verwendung der biologisch abbaubaren Polymere gemäß den Ansprüchen 1 bis 6 der der thermoplastischen Formmassen gemäß Anspruch 7 oder hergestellt gemäß den Ansprüchen 8 bis 14 zur Herstellung von Klebstoffen.

17. Kompostierbare Formkörper, erhältlich aus den biologisch abbaubaren Polymere gemäß den Ansprüchen 1 bis 6 oder der thermoplastischen Formmassen gemäß Anspruch 7 oder hergestellt gemäß den Ansprüchen 8 bis 14.

18. Klebstoffe, erhältlich aus den biologisch abbaubaren Polymere gemäß den Ansprüchen 1 bis 6 oder der thermoplastischen Formmassen gemäß Anspruch 7 oder hergestellt gemäß den Ansprüchen 8 bis 14.

19. Verwendung der biologisch abbaubaren Polymere gemäß den Ansprüchen 1 bis 6 oder der thermoplastischen Formmassen gemäß Anspruch 7 oder hergestellt gemäß den Ansprüchen 8 bis 14 zur Herstellung von biologisch abbaubaren Blends, enthaltend im wesentlichen die erfindungsgemäßen Polymere und Stärke.

20. Biologisch abbaubare Blends, erhältlich aus den biologisch abbaubaren Polymere gemäß den Ansprüchen 1 bis 6 oder der thermoplastischen Formmassen gemäß Anspruch 7 oder hergestellt gemäß den Ansprüchen 8 bis 14 und Stärke.

21. Verfahren zur Herstellung biologisch abbaubarer Blends gemäß Anspruch 20 in an sich bekannter Weise, **dadurch gekennzeichnet, daß** man Stärke mit den erfindungsgemäßen Polymeren mischt.

22. Verwendung der biologisch abbaubaren Polymere gemäß den Ansprüchen 1 bis 6 oder der thermoplastischen Formmassen gemäß Anspruch 7 oder hergestellt gemäß den Ansprüchen 8 bis 14 zur Herstellung von biologisch abbaubaren Schäumen.

23. Biologisch abbaubare Schäume, erhältlich biologisch abbaubaren Polymere gemäß den Ansprüchen 1 bis 6 oder der thermoplastischen Formmassen gemäß Anspruch 7 oder hergestellt gemäß den Ansprüchen 8 bis 14.

24. Papierbeschichtungsmittel, erhältlich aus den biologisch abbaubaren Polymere gemäß den Ansprüchen 1 bis 6 oder der thermoplastischen Formmassen gemäß Anspruch 7 oder hergestellt gemäß den Ansprüchen 8 bis 14.

## Claims

1. Biodegradable polyesters P1 obtainable by reaction of a mixture consisting essentially of
(a1) a mixture consisting essentially of
from 45 to 80 mol% of adipic acid or ester-forming derivatives thereof or mixtures thereof,
from 20 to 55 mol% of terephthalic acid or ester-forming derivatives thereof or mixtures thereof, and
from 0 to 5 mol% of a sulfonate compound,
(a2) a dihydroxy compound selected from the group consisting of C₂-C₆-alkanediols and C₅-C₁₀-cycloalkanediols,
the molar ratio of (a1) to (a2) being chosen within the range from 0.4:1 to 1.5:1, with the proviso that the polyesters P1 have a molecular weight (Mₙ) within the range from 5000 to 50,000 g/mol, a viscosity number within the range from 30 to 350 g/ml (measured in 50:50 w/w o-dichlorobenzene/phenol at a concentration of 0.5% by weight of polyester P1 at 25°C) and a melting point within the range from 50 to 170°C and with the further proviso that the polyesters P1 are prepared using from 0.01 to 5 mol%, based on the molar quantity used of component (a1), of a compound D having at least three groups capable of ester formation.

2. Biodegradable polyesters Q1 obtainable by reaction of a mixture consisting essentially of
(c1) polyester P1 as set forth in claim 1, or polyester P1 and a polyester PWD,
(c2) from 0.01 to 50% by weight, based on (c1) of hydroxycarboxylic acid B1, and the hydroxycarboxylic acid B1 being defined by the formula Ia or Ib 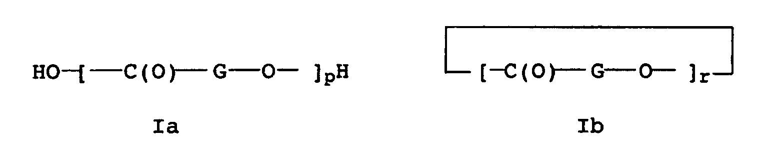 where p is an integer from 1 to 1500, r is an integer from 1 to 4, and G is a radical selected from the group consisting of phenylene, -(CH₂)ₙ-, where n is an integer from 1 to 5, -C(R)H- and -C(R)HCH₂, where R is methyl or ethyl, and
(c3) from 0 to 5 mol%, based on component (a1) from the preparation of P1 and/or PWD, of compound D as set forth in claim 1, the polyester PWD being obtainable by reaction of essentially components (a1) and (a2), the molar ratio of (a1) to (a2) being chosen within the range from 0.4:1 to 1.5:1, with the proviso that the polyesters PWD have a molecular weight (Mₙ) within the range from 5000 to 50,000 g/mol, a viscosity number within the range from 30 to 350 g/ml (measured in 50:50 w/w o-dichlorobenzene/phenol at a concentration of 0.5% by weight of polyester PWD at 25°C) and a melting point within the range from 50 to 170°C, the polyesters Q1 having a molecular weight (Mₙ) within the range from 5000 to 100,000 g/mol, a viscosity number within the range from 30 to 450 g/ml (measured in 50:50 w/w o-dichlorobenzene/phenol at a concentration of 0.5% by weight of polyester Q1 at 25°C) and a melting point within the range from 50 to 235°C.

3. Biodegradable polyesters Q2 having a molecular weight (Mₙ) within the range from 6000 to 60,000 g/mol, a viscosity number within the range from 30 to 350 g/ml (measured in 50:50 w/w o-dichlorobenzene/phenol at a concentration of 0.5% by weight of polyester Q2 at 25°C) and a melting point within the range from 50 to 170°C and obtainable by reaction of a mixture consisting essentially of
(d1) from 95 to 99.9% by weight of polyester P1 as set forth in claim 1, or polyester P1 and polyester PWD as set forth in claim 2,
(d2) from 0.1 to 5% by weight of a diisocyanate C1, and
(d3) from 0 to 5 mol%, based on component (a1) from the preparation of P1 and/or PWD as set forth in claim 2, of compound D having at least three groups capable of ester formation.

4. Biodegradable polymers T1 having a molecular weight (Mₙ) within the range from 10,000 to 100,000 g/mol, a viscosity number within the range from 30 to 450 g/ml (measured in 50:50 w/w o-dichlorobenzene/phenol at a concentration of 0.5% by weight of polymer T1 at 25°C) and a melting point within the range from 50 to 235°C and obtainable by reaction of polyester Q1 as set forth in claim 2 with (e1) from 0.1 to 5% by weight, based on polyester Q1, of diisocyanate C1 and also with (e2) from 0 to 5 mol%, based on component (a1) from the preparation of polyester Q1 via polyester P1 as set forth in claim 1 and/or PWD as set forth in claim 2, of compound D having at least three groups capable of ester formation.

5. Biodegradable polymers T2 having a molecular weight (Mₙ) within the range from 10,000 to 100,000 g/mol, a viscosity number within the range from 30 to 450 g/ml (measured in 50:50 w/w o-dichlorobenzene/phenol at a concentration of 0.5% by weight of polymer T2 at 25°C) and a melting point within the range from 50 to 235°C and obtainable by reaction of polyester Q2 with
(f1) from 0.01 to 50% by weight, based on polyester Q2, of hydroxycarboxylic acid B1 and also with
(f2) from 0 to 5 mol%, based on component (a1) from the preparation of polyester Q2 via polyester P1 as set forth in claim 1 and/or PWD as set forth in claim 2, of compound D having at least three groups capable of ester formation.

6. Biodegradable polymers T3 having a molecular weight (Mₙ) within the range from 10,000 to 100,000 g/mol, a viscosity number within the range from 30 to 450 g/ml (measured in 50:50 w/w o-dichlorobenzene/phenol at a concentration of 0.5% by weight of polymer T3 at 25°C) and a melting point within the range from 50 to 235°C and obtainable by reaction of
(g1) a mixture consisting essentially of polyester P1 as set forth in claim 1 and from 0.01 to 50% by weight, based on polyester P1, of hydroxycarboxylic acid B1, or
(g2) a mixture consisting essentially of polyesters P1 which have mutually different compositions,
with from 0.1 to 5% by weight, based on the amount of polyesters used, of diisocyanate C1 and also
with from 0 to 5 mol%, based on the respective molar quantities of (a1) used for preparing the polyesters (g1) to (g2) used, of compound D having at least three groups capable of ester formation.

7. Biodegradable thermoplastic molding compositions T4 obtainable by conventional mixing of
(h1) from 99.5 to 0.5% by weight of polyester P1 as set forth in claim 1 or polyester Q2 as set forth in claim 3, with
(h2) from 0.5 to 99.5% by weight of hydroxycarboxylic acid B1

8. A process for preparing the biodegradable polyesters P1 of claim 1 in a conventional manner, which comprises reacting a mixture consisting essentially of
(a1) a mixture consisting essentially of
from 45 to 80 mol% of adipic acid or ester-forming derivatives thereof or mixtures thereof,
from 20 to 55 mol% of terephthalic acid or ester-forming derivatives thereof or mixtures thereof, and
from 0 to 5 mol% of a sulfonate compound,
(a2) a dihydroxy compound selected from the group consisting of C₂-C₆-alkanediols and C₅-C₁₀-cycloalkanediols,
the molar ratio of (a1) to (a2) being chosen within the range from 0.4:1 to 1.5:1, and from 0.01 to 5 mol%, based on the molar quantity used of component (a1), of a compound D having at least three groups capable of ester formation.

9. A process for preparing the biodegradable polyesters Q1 of claim 2 in a conventional manner, which comprises reacting a mixture consisting essentially of
(c1) polyester P1 as set forth in claim 1 or polyester P1 and a polyester PWD as set forth in claim 2,
(c2) from 0.01 to 50% by weight, based on (c1), of hydroxycarboxylic acid B1, and the hydroxycarboxylic acid B1 being defined by the formula Ia or Ib 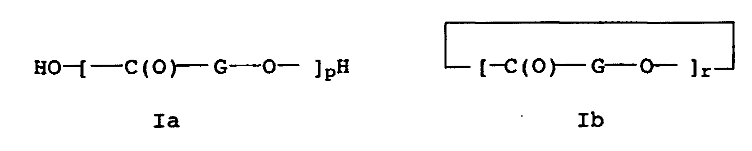 where p is an integer from 1 to 1500, r is an integer from 1 to 4, and G is a radical selected from the group consisting of phenylene, -(CH₂)ₙ-, where n is an integer from 1 to 5, -C(R)H- and -C(R)HCH₂, where R is methyl or ethyl, and
(c3) from 0 to 5 mol%, based on component (a1) from the preparation of P1 and/or PWD, of compound D as set forth in claim 1.

10. A process for preparing the biodegradable polyesters Q2 of claim 3 in a conventional manner, which comprises reacting a mixture consisting essentially of
(d1) from 95 to 99.9% by weight of polyester P1 as set forth in claim 1 or polyester P1 and polyester PWD as set forth in claim 2,
(d2) from 0.1 to 5% by weight of a diisocyanate C1, and
(d3) from 0 to 5 mol%, based on component (a1) from the preparation of P1 and/or PWD as set forth in claim 2, of compound D.

11. A process for preparing the biodegradable polymers T1 of claim 4 in a conventional manner, which comprises reacting polyester Q1 as set forth in claim 2 with (e1) from 0.1 to 5% by weight, based on polyester Q1, of diisocyanate C1 and also with (e2) from 0 to 5 mol%, based on component (a1) from the preparation of polyester Q1 via polyester P1 as set forth in claim 1 and/or PWD, as set forth in claim 2 of compound D having at least three capable of ester formation.

12. A process for preparing the biodegradable polymers T2 of claim 5 in a conventional manner, which comprises reacting
polyester Q2 as set forth in claim 3 with
(f1) from 0.01 to 50% by weight, based on polyester Q2, of hydroxycarboxylic acid B1 and also with
(f2) from 0 to 5 mol%, based on component (a1) from the preparation of polyester Q2 via polyester P1 as set forth in claim 1 and/or PWD, as set forth in claim 2 of compound D.

13. A process for preparing the biodegradable polymers T3 of claim 6 in a conventional manner, which comprises reacting
(g1) a mixture consisting essentially of polyester P1 as set forth in claim 1 and from 0.01 to 50% by weight, based on polyester P1, of hydroxycarboxylic acid B1, or
(g2) a mixture consisting essentially of polyesters P1 which have mutually different compositions,
with from 0.1 to 5% by weight, based on the amount of polyesters used, of diisocyanate C1 and also
with from 0 to 5 mol%, based on the respective molar quantities of (a1) used for preparing the polyesters (g1) to (g2) used, of compound D as set forth in claim 1.

14. A process for preparing the biodegradable thermoplastic molding compositions T4 of claim 7 in a conventional manner, which comprises mixing from 99.5 to 0.5% by weight of polyester P1 as set forth in claim 1 or polyester Q2 as set forth in claim 3 with from 0.5 to 99% by weight of hydroxycarboxylic acid B1.

15. The use of the biodegradable polymers of claims 1 to 6 or of the thermoplastic molding compositions of claim 7 or prepared as claimed in claims 8 to 14 for producing compostable moldings.

16. The use of the biodegradable polymers of claims 1 to 6 or of the thermoplastic molding compositions of claim 7 or prepared as claimed in claims 8 to 14 for producing adhesives.

17. A compostable molding obtainable from the biodegradable polymers as claimed in claims 1 to 6 or the thermoplastic molding compositions as claimed in claim 7 or prepared as claimed in claims 8 to 14.

18. An adhesive obtainable from the biodegradable polymers as claimed in claims 1 to 6 or the thermoplastic molding compositions as claimed in claim 7 or prepared as claimed in claims 8 to 14.

19. The use of the biodegradable polymers of claims 1 to 6 or of the thermoplastic molding compositions of claim 7 or prepared as claimed in claims 8 to 14 for producing biodegradable blends containing essentially the polymers of the invention and starch.

20. A biodegradable blend obtainable from the biodegradable polymers as claimed in claims 1 to 6 or the thermoplastic molding compositions as claimed in claim 7 or prepared as claimed in claims 8 to 14.

21. A process for producing biodegradable blends as claimed in claim 20 in a conventional manner, which comprises mixing starch with the polymers of the invention.

22. The use of the biodegradable polymers of claims 1 to 6 or of the thermoplastic molding compositions of claim 7 or prepared as claimed in claims 8 to 14 for producing biodegradable foams.

23. A biodegradable foam obtainable from biodegradable polymers as claimed in claims 1 to 6 or the thermoplastic molding compositions as claimed in claim 7 or prepared as claimed in claims 8 to 14.

24. A paper coating composition obtainable from the biodegradable polymers as claimed in claims 1 to 6 or the thermoplastic molding compositions as claimed in claim 7 or prepared as claimed in claims 8 to 14.

## Revendications

1. Polymères biodégradables P1, que l'on peut obtenir par réaction d'un mélange, essentiellement constitué de
(a1) un mélange, essentiellement constitué de
45 à 80% molaires d'acide adipique ou de ses dérivés estérogènes, ou leurs mélanges,
20 à 55% molaires d'acide téréphtalique ou de ses dérivés estérogènes, ou leurs mélanges,
0 à 5% molaires d'un composé contenant des groupes sulfonate,
(a2) un composé dihydroxylé, choisi parmi le groupe formé par des alcanediols en C₂ à C₆ et des cycloalcanediols en C₅ à C₁₀,
la proportion molaire de (a1) à (a2) étant choisie de l'ordre de 0,4 : 1 à 1,5 : 1, avec la condition que les polyesters P1 présentent un poids moléculaire (Mₙ) de l'ordre de 5.000 à 50.000 g/mole, un indice de viscosité de l'ordre de 30 à 350 g/ml (mesuré dans du o-dichlorobenzène / phénol (proportion molaire 50 / 50) à une concentration de 0,5% en poids de polyester P1 à une température de 25°C) et un point de fusion de l'ordre de 50 à 170°C, et avec la condition supplémentaire que l'on mette en oeuvre de 0,01 à 5% molaire, par rapport à la quantité molaire des composants (a1) mis en oeuvre, d'un composé D comportant au moins trois groupes estérifiables pour la préparation du polyester P1.

2. Polymères biodégradables Q1, que l'on peut obtenir par réaction d'un mélange essentiellement constitué de
(c1) un polyester P1 selon la revendication 1,
ou un polyester P1 et un polyester PWD,
(c2) 0,01 à 50% en poids, par rapport à (c1), d'acide hydroxycarboxylique B1, l'acide hydroxycarboxylique B1 étant défini par les formules la ou lb 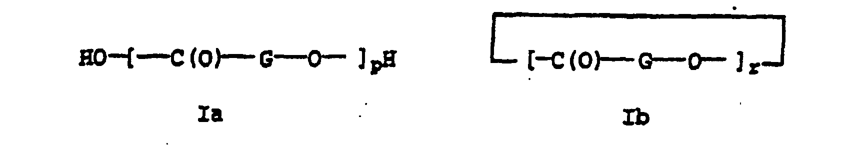 dans lesquelles p est un nombre entier de 1 à 1500 et r un nombre entier de 1 à 4, et G représente un reste choisi dans le groupe formé par les groupes phénylène, -(CH₂)ₙ-, où n est un nombre entier de 1 à 5, -C(R)H- et -C(R)HCH₂, où R représente un radical méthyle ou éthyle, et
(c3) 0 à 5% molaires, par rapport au composant (a1) de la préparation de P1 et / ou PWD, d'un composé D selon la revendication 1, où le polyester PWD peut être obtenu par réaction essentiellement des composants (a1) et (a2), la proportion molaire de (a1) à (a2) étant choisie de l'ordre de 0,4 : 1 à 1,5 : 1, avec la condition que les polyesters PWD présentent un poids moléculaire (Mₙ de l'ordre de 5.000 à 50.000 g/mole, un indice de viscosité de 30 à 350 g/ml (mesuré dans du o-dichlorobenzène / phénol (proportion pondérale 50 / 50) à une concentration de 0,5% en poids de polyester PWD à une température de 25°C) et un point de fusion de l'ordre de 50 à 170°C, les polyesters Q1 présentant un poids moléculaire (Mₙ) de l'ordre de 5.000 à 100.000 g/mole, un indice de viscosité de l'ordre de 30 à 450 g/ml (mesuré dans du o-dichlorobenzène / phénol (proportion pondérale 50 / 50) à une concentration de 0,5% en poids de polyester Q1 à une température de 25°C) et un point de fusion de l'ordre de 50 à 235°C.

3. Polyester biodégradables Q2 d'un poids moléculaire (Mₙ) de l'ordre de 6.000 à 60.000 g/mole, un indice de viscosité de l'ordre de 30 à 350 g/ml (mesuré dans du o-dichlorobenzène / phénol (proportion pondérale 50 / 50) à une concentration de 0,5% en poids de polyester Q2 à une température de 25°C) et un point de fusion de l'ordre de 50 à 170°C, que l'on peut obtenir par réaction d'un mélange essentiellement constitué de
(d1) 95 à 99,9% en poids de polyester P1 selon la revendication 1, ou de polyester P1 et de polyester PWD, selon la revendication 2,
(d2) 0,1 à 5% en poids d'un diisocyanate C1 et
(d3) 0 à 5% molaires, par rapport au composant (a1) de la préparation de P1 et /ou PWD, selon la revendication 2, d'un composant D comportant au moins trois groupes estérifiables.

4. Polymères biodégradables T1 d'un poids moléculaire (Mₙ) de l'ordre de 10.000 à 100.000 g/mole, d'un indice de viscosité de l'ordre de 30 à 450 g/ml (mesuré dans du o-dichlorobenzène / phénol (proportion pondérale 50 / 50) à une concentration de 0,5% en poids de polymère T1 à une température de 25°C) et un point de fusion de l'ordre de 50 à 235°C, que l'on peut obtenir par réaction du polyester Q1 selon la revendication 2 avec (e1) de 0,1 à 5% en poids, par rapport au polyester Q1, de diisocyanate C1 ainsi que (e2) de 0 à 5% molaires, par rapport au composant (a1) de la préparation de polyester Q1 via le polyester P1, selon la revendication 1, et / ou PWD, selon la revendication 2, de composant D comportant au moins trois groupes estérifiables.

5. Polymères biodégradables T2 d'un poids moléculaire (Mₙ) de l'ordre de 10.000 à 100.000 g/mole; un indice de viscosité de l'ordre de 30 à 450 g/ml (mesuré dans du o-dichlorobenzène / phénol (proportion pondérale 50 / 50) à une concentration de 0,5% en poids de polymère T2 à une température de 25°C) et un point de fusion de l'ordre de 50 à 235°C, que l'on peut obtenir par réaction du polyester Q2 avec
(f1) 0,01 à 50% en poids, par rapport au polyester Q2, d'acide hydroxycarboxylique B1 ainsi qu'avec
(f2) 0 à 5% molaires, par rapport au composant (a1) de la préparation de polyester Q2 via le polyester P1, selon la revendication 1, et / ou PWD, selon la revendication 2, de composé D comportant au moins trois groupes estérifiables.

6. Polymères biodégradables T3 d'un poids moléculaire (Mₙ) de l'ordre de 10.000 à 100.000 g/mole, d'un indice de viscosité de l'ordre de 30 à 450 g/ml (mesuré dans du o-dichlorobenzène / phénol (proportion pondérale 50 / 50) à une concentration de 0,5% en poids de polymère T3 à une température de 25°C) et un point de fusion de l'ordre de 50 à 235°C, que l'on peut obtenir par réaction de
(g1) un mélange essentiellement constitué de polyester P1, selon la revendication 1, et 0,01 à 50% en poids, par rapport au polyester P1, d'acide hydroxycarboxylique B1, ou
(g2) un mélange essentiellement constitué de polyesters P1, qui peuvent présenter des compositions différentes les unes des autres,
avec 0,1 à 5% en poids, par rapport à la quantité mise en oeuvre de polyester, de diisocyanate C1 ainsi que
avec 0 à 5% molaires, par rapport aux quantités respectives de composants (a1) mises en oeuvre pour la préparation des polyesters (g1) à (g2) mis en oeuvre, de composé D comportant au moins trois groupes estérifiables.

7. Masses de moulage thermoplastiques biodégradables T4, que l'on peut obtenir par mélange, de manière en soi connue, de
(h1) 99,5 à 0,5% en poids de polyesters P1, selon la revendication 1 ou de polyesters Q2, selon la revendication 1, avec
(h2) 0,5 à 99,5% en poids d'acide hydroxycarboxylique B1.

8. Procédé de préparation de polyesters biodégradables P1 selon la revendication 1, de manière en soi connue,
**caractérisé en ce que** l'on fait réagir un mélange essentiellement constitué de
(a1) un mélange, essentiellement constitué de
45 à 80% molaires d'acide adipique ou de ses dérivés estérogènes, ou leurs mélanges, 20 à 55% molaires d'acide téréphtalique ou de ses dérivés estérogènes, ou leurs mélanges, et
0 à 5% molaires d'un composé contenant des groupes sulfonate,
(a2) un composé dihydroxylé, choisi parmi le groupe formé par des alcanediols en C₂ à C₆ et des cycloalcanediols en C₅ à C₁₀,
la proportion molaire de (a1) à (a2) étant choisie de l'ordre de 0,4 : 1 à 1,5 : 1, et de 0,01 à 5% molaires, par rapport à la quantité molaire des composants (a1) mis en oeuvre, d'un composé D comportant au moins trois groupes estérifiables.

9. Procédé de préparation des polyesters biodégradables Q1, selon la revendication 2, de manière en soi connue, **caractérisé en ce que** l'on fait réagir un mélange, essentiellement constitué de
(c1) un polyester P1, selon la revendication 1, ou un polyester P1 et un polyester PWD, selon la revendication2,
(c2) 0,01 à 50% en poids, par rapport à (c1), d'acide hydroxycarboxylique B1, l'acide hydroxycarboxylique B1 étant défini par les formules la ou lb 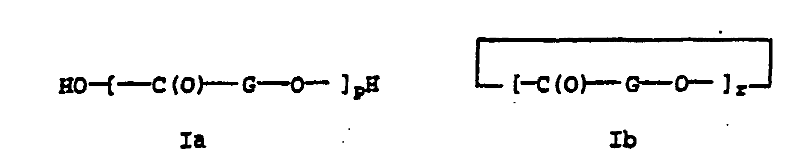 dans lesquelles p est un nombre entier de 1 à 1500 et r un nombre entier de 1 à 4, et G représente un reste choisi dans le groupe formé par les groupes phénylène, -(CH₂)ₙ-, où n est un nombre entier de 1 à 5, -C(R)H- et -C(R)HCH₂, où R représente un radical méthyle ou éthyle, et
(c3) 0 à 5% molaires, par rapport au composant (a1) de la préparation de P1 et / ou PWD, d'un composé D, selon la revendication 1.

10. Procédé de préparation des polyesters biodégradables Q2? selon la revendication 3, de manière en soi connue, **caractérisé en ce que** l'on fait réagir un mélange, essentiellement constitué de
(d1) 95 à 99,9% en poids de polyester P1, selon la revendication 1, ou de polyester P1 et de polyester PWD, selon la revendication 2,
(d2) 0,1 à 5% en poids d'un diisocyanate C1 et
(d3) 0 à 5% molaires, par rapport au composant (a1) de la préparation de P1 et /ou PWD, selon la revendication 2, d'un composé D.

11. Procédé de préparation des polymères biodégradables T1 selon la revendication 4, de manière n soi connue, **caractérisé en ce que** l'on fait réagir du polyester Q1, selon la revendication 2, avec (e1) de 0,1 à 5% en poids, par rapport au polyester Q1, de diisocyanate C1 ainsi que (e2) de 0 à 5% molaires, par rapport au composant (a1) de la préparation de polyester Q1 via le polyester P1, selon la revendication 1, et / ou PWD, selon la revendication 2, de composant D comportant au moins trois groupes estérifiables.

12. Procédé de préparation des polymères biodégradables T2 selon la revendication 5, de manière en soi connue, **caractérisé en ce que** l'on fait réagir du polyester Q2, selon la revendication 3, avec
(f1) 0,01 à 50% en poids, par rapport au polyester Q2, d'acide hydroxycarboxylique B1 ainsi qu'avec
(f2) 0 à 5% molaires, par rapport au composant (a1) de la préparation de polyester Q2 via le polyester P1, selon la revendication 1, et / ou PWD, selon la revendication 2, de composé D.

13. Procédé de préparation des polymères biodégradables T3 selon la revendication 6, de manière en soi connue, **caractérisé en ce que** l'on fait réagir
(g1) un mélange essentiellement constitué de polyester P1, selon la revendication 1, et 0,01 à 50% en poids, par rapport au polyester P1, d'acide hydroxycarboxylique B1, ou
(g2) un mélange essentiellement constitué de polyesters P1, qui peuvent présenter des compositions différentes les unes des autres,
avec 0,1 à 5% en poids, par rapport à la quantité mise en oeuvre de polyester, de diisocyanate C1 ainsi que
avec 0 à 5% molaires, par rapport aux quantités respectives de composants (a1) mises en oeuvre pour la préparation des polyesters (g1) à (g2) mis en oeuvre, de composé D, selon la revendication 1.

14. Procédé de préparation des masses de moulage thermoplastiques biodégradables T4 selon la revendication 7, de manière en soi connue, **caractérisé en ce que** l'on mélange 99,5 à 0,5% en poids de polyester P1, selon la revendication 1, ou de polyester Q2, selon la revendication 3, avec 0,5 à 99,5% en poids d'acide hydroxycarboxylique B1.

15. Utilisation des polymères biodégradables selon les revendications 1 à 6 ou des masses de moulage thermoplastiques selon la revendication 7 ou préparés selon les revendications 8 à 14 pour la préparation de corps moulés compostables.

16. Utilisation des polymères biodégradables selon les revendications 1 à 6 ou des masses de moulage thermoplastiques selon la revendication 7 ou préparés selon les revendications 8 à 14 pour la préparation d'adhésifs.

17. Corps moulés compostables, que l'on obtenir à partir des polymères biodégradables selon les revendications 1 à 6 ou des masses de moulage thermoplastiques selon la revendication 7 ou préparés selon les revendications 8 à 14.

18. Adhésifs, que l'on peut obtenir à partir des polymères biodégradables selon les revendications 1 à 6 ou des masses de moulage thermoplastiques selon la revendication 7 ou préparés selon les revendications 8 à 14.

19. Utilisation des polymères biodégradables selon les revendications 1 à 6 ou des masses de moulage thermoplastiques selon la revendication 7 ou préparés selon les revendications 8 à 14 pour la préparation de mélanges biodégradables, contenant essentiellement les polymères selon l'invention et des amidons.

20. Mélanges biodégradables, que l'on peut obtenir à partir des polymères biodégradables selon les revendications 1 à 6 ou des masses de moulage thermoplastiques selon la revendication 7 ou préparés selon les revendications 8 à 14 et d'amidons.

21. Procédé de préparation de mélanges biodégradables selon la revendication 20, de manière en soi connue, **caractérisé en ce que** l'on mélange des amidons avec les polymères selon l'invention.

22. Utilisation des polymères biodégradables selon les revendications 1 à 6 ou des masses de moulage thermoplastiques selon la revendication 7 ou préparés selon les revendications 8 à 14 pour la préparation de mousses biodégradables.

23. Mousses biodégradables, que l'on peut obtenir à partir des polymères biodégradables selon les revendications 1 à 6 ou des masses de moulage thermoplastiques selon la revendication 7 ou préparés selon les revendications 8 à 14.

24. Agents de couchage du papier, que l'on peut obtenir à partir des polymères biodégradables selon les revendications 1 à 6 ou des masses de moulage thermoplastiques selon la revendication 7 ou préparés selon les revendications 8 à 14.
